(19) Europäisches Patentamt / European Patent Office / Office européen des brevets

(11) **EP 4 650 605 A1**

(12) **EUROPÄISCHE PATENTANMELDUNG**

(43) Veröffentlichungstag:
**19.11.2025 Patentblatt 2025/47**

(21) Anmeldenummer: **25176296.9**

(22) Anmeldetag: **14.05.2025**

(51) Internationale Patentklassifikation (IPC):
*F04D 13/06* (2006.01)  *B01F 33/453* (2022.01)
*F04D 29/22* (2006.01)  *F04D 29/62* (2006.01)

(52) Gemeinsame Patentklassifikation (CPC):
**F04D 13/0606; B01F 33/453; B01F 35/165;
F04D 13/064; F04D 29/2222; F04D 29/628**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH LA MA MD TN**

(30) Priorität: **14.05.2024 EP 24175815**

(71) Anmelder: **Levitronix GmbH
8048 Zürich (CH)**

(72) Erfinder:
• **Nussbaumer, Thomas Dr.
8049 Zürich (CH)**
• **Schneeberger, Thomas Dr.
3006 Bern (CH)**

(74) Vertreter: **IPS Irsch AG
Langfeldstrasse 88
8500 Frauenfeld (CH)**

(54) **VERFAHREN ZUR HERSTELLUNG EINES ROTORS**

(57)     Verfahren zur Herstellung eines Rotors (1) für Vorrichtungen mit magnetisch gelagertem Rotor (1), umfassend die folgenden Schritte:
- Bereitstellen eines magnetisch lagerbaren Laufrads (10), welches einen magnetisch wirksamen Kern (4) aufweist, der von einer Ummantelung (30) vollständig umschlossen wird;
- Bereitstellen einer Magnetisierungsvorrichtung (100);
- Einsetzen des Laufrads (10) in die Aufnahme (101) und Entmagnetisierung des magnetisch wirksamen Kerns (4);
- Trennen des magnetisch wirksamen Kerns (4) von der Ummantelung (30);
- Anbringen einer Umkapselung (3) an dem magnetisch wirksamen Kern (4), welche den magnetisch wirksamen Kern (4) vollständig umschliesst;
- Anbringen von mindestens einem Förderelement (2) auf der Umkapselung (3).
    Ferner wird ein nach dem Verfahren hergestellter Rotor (1), sowie eine Magnetisierungsvorrichtung (100) zur Durchführung des Verfahrens vorgeschlagen.

Fig. 2

EP 4 650 605 A1

**Beschreibung**

Die Erfindung betrifft ein Verfahren zur Herstellung eines Rotors für Vorrichtungen mit magnetisch gelagertem Rotor. Ferner betrifft die Erfindung einen nach dem Verfahren hergestellten Rotor, sowie eine Magnetisierungsvorrichtung zur Durchführung des Verfahrens.

In der biotechnologischen und in der pharmazeutischen Industrie werden häufig elektromagnetische Drehantriebe eingesetzt, die als Vorrichtungen mit magnetisch gelagertem Rotor ausgestaltet sind. Hierzu zählen unter anderem Pumpvorrichtungen oder Mischvorrichtungen, bei denen der Rotor, welcher das Flügelrad bildet, magnetisch gelagert ist. Aber auch Rotoren von z.B. Viskositätsmessungsvorrichtung, Zentrifugen, Spinfiltern und/oder Lüftern können magnetisch gelagert sein. Die Pumpvorrichtungen, z.B. Zentrifugalpumpen, dienen beispielsweise dazu, Fluide durch einen Kreislauf mit einem Bioreaktor zu fördern. Die Mischvorrichtungen werden beispielsweise zur Vorbereitung von Pufferlösungen oder Zellkulturmedien oder auch zur kontinuierlichen Durchmischung und Zirkulation der Nährflüssigkeit in einem Bioreaktor verwendet.

In der Pharmaindustrie müssen bei der Herstellung von pharmazeutisch wirksamen Substanzen höchste Ansprüche an die Reinheit gestellt werden, meist müssen die mit den Substanzen in Kontakt kommenden Komponenten sogar steril sein. Ähnliche Anforderungen ergeben sich auch in der Biotechnologie, beispielsweise bei der Herstellung, Behandlung oder Züchtung von biologischen Substanzen, Zellen oder Mikroorganismen, wo ein extrem hohes Mass an Reinheit gewährleistet sein muss, um die Brauchbarkeit des hergestellten Produkts nicht zu gefährden.

Um die Reinheitserfordernisse für den Prozess möglichst gut erfüllen zu können, ist man bemüht, die Anzahl der mit den jeweiligen Substanzen in Kontakt kommenden Komponenten einer Pump- oder Mischvorrichtung möglichst klein zu halten. Hierzu sind elektromagnetisch betriebene Pump- oder Mischvorrichtungen bekannt, bei denen der Rotor, der üblicherweise das Flügelrad bildet, in dem Mischbehälter angeordnet ist. Ausserhalb des Mischbehälters ist dann ein Stator vorgesehen, welcher mittels magnetischer bzw. elektromagnetischer Felder den Rotor durch die Wand des Mischbehälters berührungslos antreibt und berührungslos magnetisch in einer Sollposition lagert. Dieses "berührungslose" Konzept hat insbesondere auch den Vorteil, dass keine mechanischen Lager oder Durchführungen in den Mischbehälter benötigt werden, die eine Ursache von Verunreinigungen bzw. Kontaminationen bilden können. Gleiches gilt natürlich auch für die anderen genannten Vorrichtungen mit magnetisch gelagertem Rotor.

Eine besonders effiziente derartige Vorrichtung, mit welcher Substanzen in einem Bioreaktor zirkuliert bzw. durchmischt werden, wird z.B. in der EP 3 115 103 A1 offenbart. Hier bilden der Stator und der in dem Mischbehälter angeordnete Rotor, welcher das Flügelrad bildet, einen lagerlosen Motor. Mit dem Begriff lagerloser Motor ist dabei ein elektromagnetischer Drehantrieb gemeint, bei welchem der Rotor vollkommen magnetisch bezüglich des Stators gelagert ist, wobei keine separaten magnetischen Lager vorgesehen sind. Der Stator ist dazu als Lager- und Antriebsstator ausgestaltet, der sowohl Stator des elektrischen Antriebs als auch Stator der magnetischen Lagerung ist. Mit den elektrischen Wicklungen des Stators lässt sich ein magnetisches Drehfeld erzeugen, welches zum einen ein Drehmoment auf den Rotor ausübt, das dessen Rotation bewirkt, und welches zum anderen eine beliebig einstellbare Querkraft auf den Rotor ausübt, sodass dessen radiale Position aktiv steuerbar bzw. regelbar ist.

Der Rotor dieser Mischvorrichtung stellt einen Integralrotor dar, weil er sowohl der Rotor des elektromagnetischen Antriebs ist als auch das Flügelrad der Mischvorrichtung. Neben der berührungslosen magnetischen Lagerung bietet der lagerlose Motor ferner den Vorteil einer sehr kompakten und platzsparenden Ausgestaltung.

Obwohl sich mit solchen berührungslos magnetisch gelagerten Mischern die Anzahl der mit den Substanzen in Kontakt kommenden Komponenten stark reduzieren lässt, ist die Reinigung bzw. das Sterilisieren dieser Komponenten immer noch mit einem sehr grossen Zeit- Material- und Kostenaufwand verbunden. Daher geht man häufig dazu über - wie dies auch in der bereits zitierten EP 3 115 103 A1 offenbart wird - die mit den Substanzen in Kontakt kommenden Komponenten als Einmal (single-use) - teile für den Einmalgebrauch auszugestalten. Eine solche Mischvorrichtung setzt sich dann aus einer Einmalvorrichtung und einer wiederverwendbaren Vorrichtung zusammen. Dabei umfasst die Einmalvorrichtung diejenigen Komponenten, welche für den Einmalgebrauch bestimmt sind, also beispielsweise den Mischbehälter mit dem Rotor, und die wiederverwendbare Vorrichtung umfasst diejenigen Komponenten, die dauerhaft also mehrfach verwendet werden, beispielsweise den Stator.

Der Begriff Einmalteile (single use) bezeichnet dabei Teile bzw. Komponenten, die bestimmungsgemäss nur einmal benutzt werden dürfen. Nach der Anwendung werden die Einmalteile entsorgt und für die nächste Anwendung durch neue, das heisst noch nicht gebrauchte Einmalteile ersetzt.

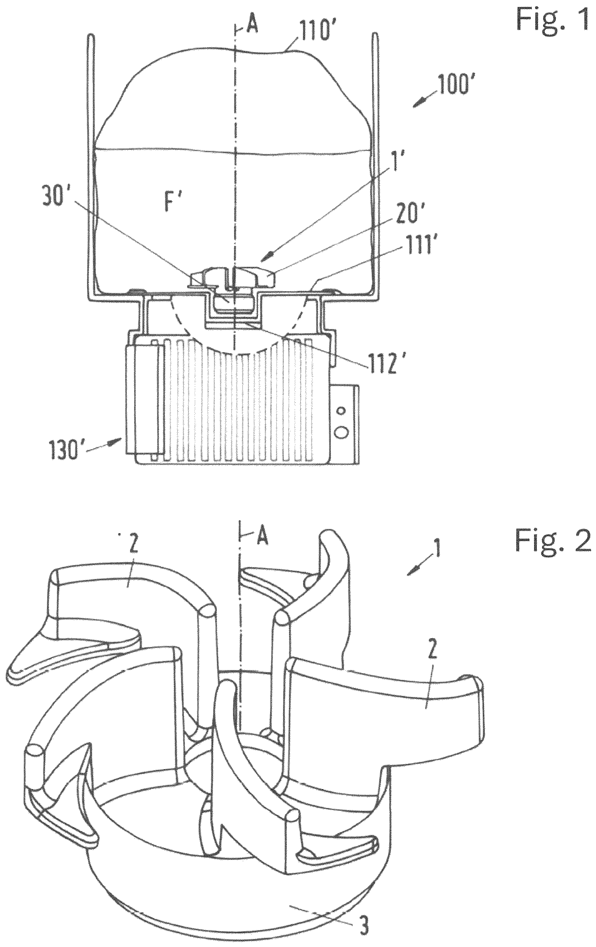

Fig. 1 zeigt in einer schematischen Darstellung einen Mischer oder einen Bioreaktor 100' wie er aus dem Stand der Technik bekannt ist.

Um anzuzeigen, dass es sich bei der Darstellung in Fig. 1 um eine Vorrichtung aus dem Stand der Technik handelt, sind hier die Bezugszeichen jeweils mit einem Hochkomma bzw. mit einem Strich versehen. Der Bioreaktor 100' umfasst einen Mischbehälter 110', der als Einmalteil ausgestaltet ist. Bei der Ausgestaltung als Einmalteil ist der Mischbehälter 110' häufig als flexibler Kunststoffbeutel ausgestaltet, der in einem formstabilen und wiederverwendbaren Stützbehälter angeordnet ist. Der Stützbehälter 120' ist beispielsweise aus Edelstahl oder als formstabiles Kunststoffteil ausgestaltet.

Der als Kunststoffbeutel ausgestaltete Mischbehälter 110' ist mit einem Fluid F', beispielsweise mit einem Medium, einer Pufferlösung oder einer Zellbrühe, befüllt. Der Mischbehälter 110' umfasst eine formstabile Grundplatte 111' mit einem zylindrischen Becher 112' für die Aufnahme eines Flügelrads 1'. Das Flügelrad 1' bildet den Rotor einer Mischvorrichtung und umfasst einen magnetisch wirksamen Kern (in Fig. 1 nicht zu erkennen), der von einer Ummantelung 30' vollständig umschlossen wird, wobei die Ummantelung 30' aus einem Kunststoff besteht. Auf der Ummantelung 30' ist eine Mehrzahl von Schaufeln 20' zum Mischen des Fluids F' vorgesehen. Im Betriebszustand ist der magnetisch wirksame Kern des Flügelrads 1' in dem zylindrischen Becher 112' angeordnet.

Die Mischvorrichtung umfasst ferner einen Stator 130', der zusammen mit dem Flügelrad 1' einen elektromagnetischen Drehantrieb bildet, welcher nach dem Prinzip des lagerlosen Motors ausgestaltet ist. Der Stator 130' ist also als Lager- und Antriebsstator ausgestaltet, mit welchem das Flügelrad 1' im Betriebszustand berührungslos magnetisch zur Rotation um eine Solldrehachse antreibbar und bezüglich des Stators 130' berührungslos magnetisch lagerbar ist. Die Solldrehachse definiert eine axiale Richtung A.

In Fig. 1 ist der Stator 130' mit einem Ausbruch dargestellt, damit die Anordnung des Flügelrads 1' im Stator 130' besser erkennbar ist. Der Stator 130', der ausserhalb des Mischbehälters 110' angeordnet ist, umfasst eine becherförmige Ausnehmung, in welche der zylindrische Becher 112' des Mischbehälters 110' einsetzbar ist, sodass das Flügelrad 1' im Stator 130' berührungslos magnetisch lagerbar ist.

Im Stand der Technik sind auch Ausführungen von Magnetlagervorrichtungen bekannt, wo der Rotor als Aussenläufer ausgestaltet ist, und um einen Statorteil angeordnet ist.

Der als flexibler Kunststoffbeutel ausgestaltete Mischbehälter 110' mit dem darin angeordneten Flügelrad 1' sind als Einmalvorrichtung für den Einmalgebrauch ausgestaltet, während der Stator 130' und der Stützbehälter 120' als wiederverwendbare Vorrichtung für den Mehrfachgebrauch ausgestaltet sind. Nach einer Anwendung wird also der Mischbehälter 110' mit dem darin befindlichen Flügelrad 1' aus der wiederverwendbaren Vorrichtung entfernt und entsorgt. Für die nächste Anwendung wird dann ein neuer, das heisst noch nicht benutzter Mischbehälter 110' mit einem neuen, das heisst noch nicht benutzten Flügelrad 1', welches in den Mischbehälter 110' angeordnet ist, in den Stator 130' und den Stützbehälter 120' eingesetzt.

Die Ausgestaltung des Mischbehälters 110' und des Flügelrads 1' als Einmalteile hat sich insbesondere in der pharmazeutischen und in der biotechnologischen Industrie als sehr vorteilhaft erwiesen, denn sie ermöglicht eine sehr hohe Flexibilität in den verschiedenen Prozessen. Zudem können zeit- und kostenintensive Sterilisierungsprozesse zumindest erheblich reduziert werden. Ferner lässt sich die Gefahr von Kreuzkontaminationen deutlich verringern.

Ein wesentlicher Aspekt ist es, dass die Einmalteile möglichst wirtschaftlich und kostengünstig gefertigt werden können. Hierbei wird insbesondere auch Wert auf preisgünstige, einfache Ausgangsmaterialien, wie beispielsweise handelsübliche Kunststoffe, gelegt. Auch Nachhaltigkeit, ein umweltbewusster Umgang sowie eine verantwortungsvolle Nutzung der zur Verfügung stehenden Ressourcen sind wesentliche Aspekte bei der Konzeption von Einwegteilen. Diesen Aspekten widmet sich die Erfindung.

Ferner weisen auch Rotoren, wie z.B. die genannten Flügelräder, welche nicht als Einmalteil ausgestaltet sind, also mehrmals in Prozessen eingesetzt werden, eine endliche Lebensdauer auf. Das heisst, dass nach einer bestimmten Anzahl an Einsätzen der Rotor nicht mehr brauchbar ist und entsorgt wird. Der häufigste Grund hierfür ist, dass Elemente des Rotors, wie z.B. die Flügel bei Flügelrädern abgenutzt sind oder die Ummantelung abgenutzt ist, z.B. durch aggressive Substanzen. Der magnetisch wirksame Kern des Rotors ist in den meisten Fällen aber noch nicht beschädigt bzw. abgenutzt.

Es ist daher eine Aufgabe der Erfindung, ein Verfahren zur Herstellung eines Rotors für Vorrichtungen mit magnetisch gelagertem Rotor vorzuschlagen, das eine besonders kostengünstige, umweltschonende und nachhaltige Herstellung eines Rotors ermöglicht. Dabei soll der Rotor insbesondere auch als Einmalteil für den Einmalgebrauch ausgestaltet werden können. Weiterhin ist es eine Aufgabe der Erfindung einen Rotor, hergestellt durch dieses Verfahren, sowie eine Magnetisierungsvorrichtung für die Durchführung des Verfahrens vorzuschlagen.

Die diese Aufgaben lösenden Gegenstände der Erfindung sind durch die Merkmale der unabhängigen Patentansprüche gekennzeichnet.

Erfindungsgemäss wird also ein Verfahren vorgeschlagen zur Herstellung eines Rotors für Vorrichtungen mit magnetisch gelagertem Rotor, umfassend die folgenden Schritte:

- Bereitstellen eines magnetisch lagerbaren Laufrads, welches einen magnetisch wirksamen Kern aufweist, der von einer Ummantelung vollständig umschlossen wird, wobei die Ummantelung einen Kunststoff umfasst, und wobei auf der Ummantelung mindestens ein Laufradelement zur Interaktion mit Substanzen vorgesehen ist;
- Bereitstellen einer Magnetisierungsvorrichtung, wobei die Magnetisierungsvorrichtung für die Entmagnetisierung und/oder die Magnetisierung des magnetisch wirksamen Kerns vorgesehen ist, wobei die Magnetisierungsvorrichtung eine Aufnahme umfasst, in welche das Laufrad und/oder der Rotor einsetzbar sind;

- Einsetzen des Laufrads in die Aufnahme und Entmagnetisierung des magnetisch wirksamen Kerns;
- Trennen des magnetisch wirksamen Kerns von der Ummantelung;
- Anbringen einer Umkapselung an dem magnetisch wirksamen Kern, welche einen Kunststoff umfasst, und welche den magnetisch wirksamen Kern vollständig umschliesst;
- Anbringen von mindestens einem Förderelement auf der Umkapselung.

Es versteht sich, dass die Anordnung der einzelnen Schritte keine Reihenfolge darstellt, in welcher die einzelnen Schritte des Verfahrens durchgeführt werden. Die einzelnen Schritte können in jeglicher Kombination durchgeführt werden. Weiterhin versteht sich, dass die einzelnen Schritte mindestens einmal durchgeführt werden. Das heisst, es ist auch möglich, dass einer oder mehrere der Schritte mehr als einmal durchgeführt werden können. Ebenso können Schritte auch kombiniert in einem Schritt erfolgen. Beispielsweise kann das Anbringen einer Umkapselung des magnetisch wirksamen Kerns in einem Schritt zusammen mit dem Anbringen des mindestens einen Förderelements in beispielsweise einem Giessprozess erfolgen.

Weiterhin versteht sich, dass die Anbringung der Umkapselung an dem magnetisch wirksamen Kern bedeutet, dass diese sowohl unmittelbar am magnetisch wirksamen Kern aber auch nicht unmittelbar angebracht sein kann, also z.B., dass zwischen dem magnetisch wirksamen Kern und der Ummantelung noch mindestens eine weitere Schicht angebracht sein kann.

Unter einem Förderelement, welches auf der Umkapselung angebracht wird, wird eine Element verstanden, dass zur Interaktion mit Substanz, insbesondere zur Förderung dieser, vorgesehen ist. So sind dies zum Beispiel Flügel bei Pump-, Misch- und/oder Lüftervorrichtungen, Rotorkörper bei Zentrifugen-, Viskositätssensor- und/oder Spin-Filter-Vorrichtungen.

Erfindungsgemäss wird also vorgeschlagen, aus einem existierenden Laufrad, beispielsweise einem als Einmalteil ausgestalteten und bereits benutzten Laufrad, den magnetisch wirksamen Kern herauszutrennen und diesen für die Herstellung eines neuen Rotors zu verwenden. So kann insbesondere auch bei benutzten Einmalteilen der magnetisch wirksame Kern wiederverwendet werden. Da der magnetisch wirksame Kern in dem benutzten Laufrad durch die Ummantelung vor einem Kontakt mit Substanzen geschützt war, besteht auch keine Gefahr, dass durch die Wiederverwendung eine Kreuzkontamination verursacht werden könnte.

Da der magnetisch wirksame Kern üblicherweise die kostspieligste Komponente des Rotors ist, führt die Wiederverwendung des magnetisch wirksamen Kerns zu einer deutlichen Kostenreduktion bei der Herstellung des Rotors.

Es ist gemäss dem heutigen Stand der Technik üblich, für den magnetisch wirksamen Kern des Rotors einen oder mehrere Permanentmagnete zu verwenden. Als Permanentmagnete werden insbesondere Metalle der Seltenen Erden bzw. Verbindungen oder Legierungen dieser Metalle verwendet, weil sich mit diesen aufgrund ihrer magnetischen Eigenschaften sehr starke permanentmagnetische Felder erzeugen lassen. Bekannte und häufig verwendete Beispiele dieser Seltenen Erden sind Neodym und Samarium. Solche Metalle stellen jedoch aufgrund ihrer aufwändigen Gewinnung und Verarbeitung einen erheblichen Kostenfaktor dar. Zudem ist die Entsorgung solcher Permanentmagnete, beispielsweise nach dem Einmalgebrauch auch unter umwelttechnischen Aspekten häufig mit Problemen oder hohem Aufwand verbunden, wodurch zusätzliche Kosten entstehen. Es ist daher unter wirtschaftlichen, Kosten- und Umweltaspekten insbesondere auch bei Einmalanwendungen vorteilhaft, dass der magnetisch wirksame Kern eines Laufrads nach der Benutzung des Laufrads für die Herstellung eines neuen Rotors verwendet wird. Insbesondere lässt sich die $CO_2$ Bilanz des Rotors durch das erfindungsgemässe Verfahren stark verbessern. Auch unter dem Aspekt der Nachhaltigkeit ist die Wiederverwendung des magnetisch wirksamen Kerns für die Herstellung eines neuen Rotors besonders vorteilhaft. Die Entmagnetisierung des magnetisch wirksamen Kerns vor dem Trennen des magnetisch wirksamen Kerns von der Ummantelung ist vorteilhaft, da dadurch vermieden wird, dass der magnetisch wirksame Kern Verunreinigungen anzieht. Da der magnetisch wirksame Kern im Laufe des Verfahrens vollständig von der Ummantelung getrennt wird, kann durch die vorgängige Entmagnetisierung in besserem Masse gewährleistet werden, dass sich Verunreinigungen an dem magnetisch wirksamen Kern nicht anlagern.

Das Entmagnetisieren ermöglicht ein sicheres Handling während des Verfahrens, da danach der magnetisch wirksame Kern keine anziehende Wirkung mehr aufweist und somit keine unkontrollierten Kräfte ausüben kann. Auch die Regelung von Einrichtungen zur Durchführung des Verfahrens (wie z.B. Manipulatoreinrichtung wie z.B. Roboter) wird dadurch stabiler und kann mit weniger Aufwand realisiert werden.

Mit dem Begriff "Entmagnetisieren" ist im Rahmen der vorliegenden Anmeldung gemeint, dass das magnetische Moment (Dipolmoment) des magnetisch wirksamen Kerns auf einen Wert reduziert wird, welcher höchstens 40%, bevorzugt höchstens 10% des magnetischen Moments beträgt, das der magnetisch wirksame Kern bei vollständiger Magnetisierung aufweist.

Dies entspricht physikalisch der äquivalenten Definition, dass die im Magneten und/oder an der Magnetoberfläche verbleibende magnetische Flussdichte in einem Polbereich, sprich dort wo das Magnetfeld ein-, respektive austritt eine magnetische Restflussdichte aufweist von höchstens 40%, bevorzugt höchstens 10% im Vergleich zu vollständiger Magnetisierung.

Ferner lassen sich verschiedene optionale Bearbeitungsschritte, wie beispielsweise mechanische Bearbeitung mit metallischen Werkzeugen oder das Umspritzen des magnetisch wirksamen Kerns in einer Spritzgiessvorrichtung einfacher durchführen, wenn der magnetisch wirksame Kern entmagnetisiert ist.

Gemäss einer bevorzugten Verfahrensführung wird das mindestens eine Laufradelement von der Ummantelung entfernt.

Gemäss einer bevorzugten Verfahrensführung weist der magnetisch wirksame Kern eine Magnetisierungsrichtung auf, wobei vor der Entmagnetisierung des magnetisch wirksamen Kerns die Magnetisierungsrichtung bestimmt wird.

Grundsätzlich können zur Bestimmung der Magnetisierungsrichtung sämtliche, aus dem Stand der Technik bekannte Methoden eingesetzt werden.

Vorzugsweise erfolgt die Bestimmung der Magnetisierungsrichtung durch eine Magnetfeldmessung und/oder durch eine, an dem Laufrad angebrachte Kennzeichnung für die Magnetisierungsrichtung.

Die Magnetfeldmessungen können z.B. mit Hilfe von Magnetfeldsensoren durchgeführt werden. Ebenso kann die Magnetisierungsrichtung auch mit Hilfe eines Prüfmagneten, also eines Magneten, dessen Magnetisierungsrichtung man kennt, und/oder durch einen Prüfgegenstand aus einem magnetischen oder magnetisierbaren Material, bestimmt werden. Die Kennzeichnung, welche an dem Laufrad angebracht ist, kann entweder eine optische Markierung, wie z.B. ein Punkt oder ein anderes geometrisches Zeichen sein oder aber auch eine physische Markierung wie z.B. eine Kerbe oder eine Bohrung sein.

Gemäss einer bevorzugten Verfahrensführung erfolgt das Einsetzen des Laufrads in die Aufnahme ausgerichtet, wobei die Ausrichtung anhand der bestimmten Magnetisierungsrichtung erfolgt.

Dabei ist die Bestimmung der Magnetisierungsrichtung vorteilhaft, da dadurch das Laufrad bzw. der Rotor schnell in der richtigen Orientierung ausgerichtet, bevorzugt parallel zur Feldrichtung des Ent-/Magnetisierungsfelds der Magnetisierungsvorrichtung in die Magnetisierungsvorrichtung eingebracht werden kann.

Gemäss einer bevorzugten Verfahrensführung wird das Laufrad und/oder der Rotor in der Aufnahme fixiert, sodass keine Translation- und/oder Rotationsbewegung des Laufrads und/oder des Rotors möglich ist.

Dies ist vorteilhaft, da dadurch ein unerwünschtes Ausrichten des magnetisch wirksamen Kerns verhindert wird. Anderenfalls wäre es möglich, dass der magnetisch wirksame Kern sich selbst im Ent-/Magnetisierungsfeld ausrichtet und somit anders z.B. entgegengesetzt als für den Ent-/Magnetisierungsvorgang benötigt, angeordnet ist. Gerade bei der Entmagnetisierung ist dies vorteilhaft, da hier ein Gegenfeld zum Feld des magnetisch wirksamen Kerns erzeugt wird und dieser dadurch ohne Fixierung rotieren würde, wodurch die Entmagnetisierung nicht zuverlässig funktionieren würde.

Weiterhin ist die Bestimmung der Magnetisierungsrichtung, die Ausrichtung des magnetisch wirksamen Kerns in der Aufnahme, sowie die Fixierung in der Aufnahme vorteilhaft, da dadurch das Auftreten von Feldverzerrungen und der Verbleib von restharmonischen Magnetisierungen verhindert wird. Restharmonische Magnetisierungen sind bei diesen Anwendungen zu vermeiden, da sie nachteilig sind für z.B. eine komplette Entmagnetisierung und da sie das Anziehen von unerwünschten Verunreinigungen durch den magnetisch wirksamen Kern fördern. Auch im Betrieb der Rotoren in den Vorrichtungen, in welchen sie magnetisch gelagert werden, sind restharmonische Magnetisierungen von Nachteil. Zum Beispiel beeinflussen sie die Positionssensorik negativ, was Auswirkungen auf die magnetische Lagerung des Rotors hat, wodurch die Lagerungsstabilität verschlechtert wird. Ferner resultiert dies in Vibrationen im Betrieb der Vorrichtung was zu höheren Verlusten führt.

Gemäss einer bevorzugten Verfahrensführung erfolgt die Entmagnetisierung des magnetisch wirksamen Kerns durch ein abklingendes Wechselfeld.

Das abklingende Wechselfeld kann dabei beispielsweise eine abklingende Sinusform haben, es kann aber auch z.B. schrittweise oder in anderer Form erfolgen.

Das abklingende Wechselfeld wird dabei von einer oder mehrerer Spulen generiert.

Vorzugsweise weist das abklingende Wechselfeld eine Frequenz F auf, wobei der magnetisch wirksame Kern ein permanentmagnetisches Material umfasst, wobei das permanentmagnetische Material eine magnetische Permeabilität und eine elektrische Leitfähigkeit aufweist, wobei der magnetisch wirksame Kern eine axiale Erstreckung in einer axialen Richtung und eine radiale Erstreckung in einer radialen Richtung aufweist, wobei die axiale Richtung und die radiale Richtung senkrecht zu einander angeordnet sind, wobei das abklingende Wechselfeld eine Eindringtiefe in den magnetisch wirksamen Kern aufweist, wobei die Eindringtiefe mindestens gleich gross ist, wie die Hälfte der axialen Erstreckung und/oder der radialen Erstreckung, und wobei die Frequenz F (in Hertz) die Beziehung

$$F < \frac{1}{\pi \cdot \mu \cdot \sigma \cdot T^2}$$

erfüllt. Wobei $\mu$ die magnetische Permeabilität für die magnetische Feldstärke H bei H=0 ist, wobei H in der Einheit A/m (Ampere pro Meter) angegeben wird, wobei $\sigma$ die elektrische Leitfähigkeit des permanentmagnetischen Materials in der Einheit S/m (Siemens pro Meter) ist und wobei T die Eindringtiefe (Meter) angibt. Die Eindringtiefe muss in diesem Fall mindestens gleich gross sein wie die Hälfte der axialen Erstreckung und/oder der radialen Erstreckung des magnetisch wirksamen Kerns. Das heisst, in anderen Worten, die Eindringtiefe muss so gross sein, dass sie jeden Raumpunkt in dem magnetisch wirksamen Kern erreicht. Dies ist notwendig damit eine Interaktion mit jedem magnetischen Moment, welches vom magnetisch wirksamen Kern umfasst wird, möglich ist.

Für permanentmagnetische Materialien, welche Neodym-Eisen-Bor (NdFeB) umfasst ist die Frequenz bevorzugt kleiner 600 Hz, besonders bevorzugt kleiner 150Hz.

Im Allgemeinen, also nicht nur auf permanent-magentische Materialien, welche NdFeB umfasst eingeschränkt, ist die Frequenz bevorzugt kleiner als 300 Hz, und besonders bevorzugt kleiner als 200 Hz.

Die Feldstärke im Magneten, während dem Entmagnetisieren erreicht zu einem Zeitpunkt, bevorzugt beim ersten Ausschlag des Wechselfeldes bevorzugt eine negative Feldstärke von tiefer als -HcJ, wobei -HcJ diejenige negative Feldstärke ist, bei der die Polarisation J im Magneten dem Wert J=0 entspricht.

Besonders bevorzugt alterniert beim Entmagnetisieren durch das abklingenden Wechselfeld ein magnetische Betriebspunkt des Permanentmagneten definiert durch eine graphische Koordinate der magnetischen Flussdichte B und der magnetischen Feldstärke H, also der Betriebspunkt (B,H) in der Koordinaten-Ebene des Magnetkennfeldes definiert durch die Achsen B und H mehrmals abwechselnd über eine Gerade mit Polarisation J=0, bevorzugt mindestens vier Mal, besonders bevorzugt mindestens sechs Mal.

Gemäss einer bevorzugten Verfahrensführung erfolgt nach der Entmagnetisierung eine Messung der Restmagnetisierung des magnetisch wirksamen Kerns.

Ein nicht genügend entmagnetisierter magnetisch wirksamer Kern kann durch zwei- oder mehrmaliges Entmagnetisieren stärker entmagnetisiert werden

Dies ist vorteilhaft, da dadurch überprüft werden kann, ob das Laufrad bereits weiterbearbeitet werden kann oder ob eine erneute Entmagnetisierung vorgenommen werden muss.

Gemäss einer bevorzugten Verfahrensführung wird der magnetisch wirksame Kern nach Anbringen der Umkapselung und/oder nach Anbringen des mindestens einen Förderelements auf der Umkapselung magnetisiert.

Das heisst, das Magnetisieren kann unmittelbar nach dem Anbringen der Umkapselung durchgeführt werden oder auch nachdem das mindestens eine Förderelement auf der Umkapselung angebracht ist.

Um den magnetisch wirksamen Kern aus der Ummantelung herauszutrennen, sind mehrere Varianten möglich. Beispielsweise erfolgt das Trennen des magnetisch wirksamen Kerns von der Ummantelung durch eine mechanische Bearbeitung.

Die mechanische Bearbeitung umfasst z.B. Schneiden oder Bohren oder Schleifen oder Fräsen.

Eine bevorzugte Variante ist es, dass das Trennen des magnetisch wirksamen Kerns von der Ummantelung mittels einer mechanischen Pressvorrichtung erfolgt. Dazu ist es möglich, den magnetisch wirksamen Kern mittels der Pressvorrichtung durch die Ummantelung hindurch zu pressen und ihn dadurch aus der Ummantelung herauszudrücken. Dabei ist bevorzugt, dass während des Pressvorgangs zwischen dem magnetisch wirksamen Kern und der Pressvorrichtung mindestens ein Teil der Ummantelung angeordnet ist, sodass der magnetisch wirksame Kern vor Beschädigung geschützt wird.

Falls der magnetisch wirksame Kern ringförmig ausgestaltet ist, ist es bevorzugt, dass zum Trennen des magnetisch wirksamen Kerns von der Ummantelung eine zentrale Bohrung gemacht wird, welche sich in einer axialen Richtung vollständig durch die Ummantelung erstreckt. Die Ummantelung wird also in axialer Richtung und vorzugsweise im zentralen Bereich der Ummantelung vollständig durchbohrt, sodass eine zylindrische Öffnung im Zentrum der Ummantelung entsteht. Anschliessend ist die Ummantelung ringförmig ausgestaltet.

Eine weitere Variante besteht darin, dass der Ummantelung Wärme zugeführt wird, um den magnetisch wirksamen Kern von der Ummantelung zu trennen. So kann beispielsweise der Kunststoff, aus welchem die Ummantelung besteht, angeschmolzen oder aufgeschmolzen werden, um den magnetisch wirksamen Kern von der Ummantelung zu trennen. Insbesondere ist es auch möglich, einen solchen thermischen Prozess mit einer mechanischen Bearbeitung zu kombinieren, um den magnetisch wirksamen Kern von der Ummantelung zu trennen. Die Ummantelung kann beispielsweise durch Wärmezufuhr aufgeweicht werden, um dann den magnetisch wirksamen Kern, beispielsweise mit einer Pressvorrichtung aus der Ummantelung herauszudrücken.

Gemäss einer bevorzugten Verfahrensführung wird die Umkapselung durch Umspritzen des magnetisch wirksamen Kerns mit einem Kunststoff hergestellt. Dies kann beispielsweise in einem Spritzgiessprozess in einer Spritzgiessvorrichtung erfolgen.

Eine weitere bevorzugte Verfahrensführung besteht darin, dass die Umkapselung und das mindestens eine Förderelement in einem einzigen Spritzgiessprozess gefertigt werden. Das bedeutet, dass in einem einzigen Spritzgiessprozess die Umkapselung und das mindestens eine Förderelement gemeinsam hergestellt werden. Natürlich ist es optional möglich, dass die endgültige Form des mindestens einen Förderelements- und/oder der Umkapselung nach diesem Spritzgiessprozess durch eine mechanische Nachbearbeitung, beispielsweise durch eine spanabhebende Bearbeitung erzeugt wird.

Gemäss einer anderen bevorzugten Verfahrensführung wird die Umkapselung durch Fügen mehrerer Komponenten hergestellt.

Dazu ist es beispielsweise möglich, dass die Umkapselung einen Becher und einen Deckel umfasst, wobei der magnetisch wirksame Kern in den Becher eingelegt wird, und wobei der Deckel mit dem Becher verschweisst wird. Somit wird die Umkapselung aus zwei Kunststoffteilen hergestellt, nämlich aus dem Becher, in welchen der magnetisch wirksame Kern eingelegt wird, und aus dem Deckel, mit welchem der Becher verschlossen wird. Das Verschweissen des Bechers mit dem Deckel kann beispielsweise mittels Spiegel-, Ultraschall- oder Infrarotschweissens erfolgen. Natürlich sind auch andere Fügeverfahren möglich, um den Deckel mit dem Becher zu verbinden, beispielsweise Kleben oder Verschrauben.

Eine weitere bevorzugte Verfahrensführung besteht darin, dass die Umkapselung mittels eines Sinterprozesses hergestellt wird. Die Umkapselung wird dann aus einem Pulver oder aus einem Granulat hergestellt, das unter Anwendung von Druck und optional eine Temperaturbehandlung auf den magnetisch wirksamen Kern gepresst wird, derart, dass der magnetisch wirksame Kern vollständig umschlossen wird.

Das mindestens eine Förderelement wird beispielsweise durch Schweissen auf der Umkapselung befestigt. Dabei ist es bei Ausgestaltungen mit einer Mehrzahl von Förderelementen möglich, dass jedes Förderelement einzeln auf der Umkapselung befestigt wird, beispielsweise durch Schweissen oder Kleben, oder, dass zunächst eine Grundplatte mit den darauf angeordneten und fixierten Förderelementen hergestellt wird, und diese Grundplatte dann auf der Umkapselung fixiert wird.

Insbesondere für Anwendungen in der biotechnologischen oder der pharmazeutischen Industrie ist es bevorzugt, dass die Umkapselung und das mindestens eine Förderelement aus einem biokompatiblen Kunststoff bestehen.

Beispielsweise können die Umkapselung und das mindestens eine Förderelement aus Polyethylen (PE) oder Polypropylen (PP) bestehen.

Ferner wird ein Rotor für Vorrichtungen mit magnetisch gelagertem Rotor, hergestellt durch das erfindungsgemässe Verfahren vorgeschlagen.

Gemäss einer bevorzugten Ausgestaltung ist der Rotor als Einmalteil ausgestaltet.

Ferner wird eine Magnetisierungsvorrichtung zur Durchführung eines erfindungsgemässen Verfahrens vorgeschlagen, umfassend eine Generatoreinheit, eine Spuleneinheit und eine Aufnahme, in welche das Laufrad und/oder der Rotor einsetzbar sind und womit der magnetisch wirksame Kern entmagnetisiert und/oder magnetisiert werden kann.

Die Generatoreinheit erzeugt dabei über eine Ladevorrichtung, bevorzugt durch Anschluss an ein Stromnetz, eine Ladespannung als Gleichspannung für Kondensatoren und/oder Kapazitäten, welcher in der Generatoreinheit angeordnet sind. Bevorzugt weist die Generatoreinheit weiter Mechanismen auf, die Kondensatoren und/oder Kapazitäten der Generatoreinheit elektrisch ganz oder teilweise von der Ladevorrichtung trennen, und stattdessen mit der Spuleneinheit elektrisch verbinden. Die Generatoreinheit kann dadurch einen Ent-/Magnetisierungsspannung und/oder einen Ent-/Magnetisierungsstrom für die Spuleneinheit durch das Entladen der Kondensatoren und/oder Kapazitäten über die Spuleneinheit, erzeugen. Die Generatoreinheit kann selbstverständlich weitere Komponenten enthalten. Zum Beispiel eine zuschaltbare Freilaufdiode um Wechselströme in der Spuleneinheit beim Magnetisieren, also dem Einprägen eines Magnetfeldes zwecks Magnetisierung zu vermeiden. Ebenso ist es möglich, dass andere Bauteile, die für denselben Zweck ausgestaltet sind, von der Generatoreinheit umfasst werden.

Das heisst, mit der Magnetisierungsvorrichtung kann das Laufrad entmagnetisiert und der Rotor magnetisiert werden.

Gemäss einer bevorzugten Ausgestaltung umfasst die Spuleneinheit die Aufnahme und mindestens eine Spule.

Dabei wird die Anzahl der Spulen in der Spuleneinheit bevorzugterweise in Abhängigkeit der Anzahl der Polpaare des magnetisch wirksamen Kerns gewählt.

Dies hat den Vorteil, dass dadurch der Ent-/Magnetisierungvorgang auf den jeweiligen magnetisch wirksamen Kern angepasst werden.

Bevorzugt wird die mindestens eine Spule so ausgeführt, dass der magnetisch wirksame Kern sich während dem Ent-/Magnetisieren in einem weitgehend homogenen Feldbereich befindet. Dies wird bevorzugt dadurch erreicht, dass die mindestens Spule einen räumlich grösseren Feldbereich aufspannen, in welchem der magnetisch wirksame Kern ent-/magnetisiert wird, als die räumliche Grösse des Feldbereichs des magnetisch wirksamen Kerns selbst.

In einer bevorzugten Ausführung können in der Aufnahme mehrere Rotoren und / oder Laufräder gleichzeitig ent/magnetisiert werden. Dies erhöht die Taktrate.

Gemäss einer bevorzugten Ausgestaltung ist in die Aufnahme ein Fixierungselement einsetzbar, in welchem das Laufrad und/oder der Rotor in einer vorgegebenen Position fixiert werden können, sodass keine Translation- und/oder Rotationsbewegung des Laufrads und/oder des Rotors möglich ist.

Ebenso sind Ausgestaltungen möglich, bei denen die Aufnahme selbst ein Fixierungselement umfasst.

Vorzugsweise stellt die vorgegebene Position eine Magnetisierungsposition dar, wobei in der Magnetisierungsposition die Magnetisierungsrichtung des magnetisch wirksamen Kerns parallel zur einer Richtung ausgerichtet ist, wobei die Richtung die Feldrichtung eines Magnetisierungsfelds oder eines Entmagnetisierungsfelds darstellt.

Gemäss einer bevorzugten Ausgestaltung ist das Fixierungselement zweiteilig als ein Oberteil und Unterteil ausgestaltet, wobei bevorzugterweise das Oberteil und Unterteil durch eine kraftschlüssige Verbindung und/oder eine formschlüssige Verbindung miteinander verbunden werden können.

Gemäss einer bevorzugten Ausgestaltung umfasst die Magnetisierungsvorrichtung einen Schwingkreis, wobei der Schwingkreis mindestens ein Widerstandsbauteil mit einem elektrischen Widerstand, mindestens ein Kapazitätsbauteil mit einer Kapazität und mindestens ein Induktivitätsbauteil mit einer Induktivität umfasst, wobei der Schwingkreis einen Schwingkreiskennwert aufweist, wobei der Schwingkreiskennwert während dem Entmagnetisieren die Beziehung

$$SK = \frac{R}{2} \cdot \sqrt{\frac{C}{L}} < 1$$

erfüllen muss.

Dabei ist R der elektrische Widerstand, C die Kapazität und L die Induktivität.

Bevorzugt ist die Kapazität multipliziert mit der Hälfte des Quadrats der Ladespannung, grösser als eine Energiekapazität, welche benötigt wird, um den magnetisch wirksamen Kern zu entmagnetisieren.

Der Schwingkreiskennwert kann über eine Regelungseinrichtung, welche die Magnetisierungsvorrichtung bevorzugt umfasst, geregelt und/oder nach einem vorgegebenen Wert eingestellt werden. Beispielsweise kann die Kapazität durch zuschalten oder entfernen von parallel geschalteten Kapazitäten eingestellt werden.

Weitere vorteilhafte Massnahmen und Ausgestaltungen der Erfindung ergeben sich aus den abhängigen Ansprüchen.

Im Folgenden wird die Erfindung anhand von Ausführungsbeispielen und anhand der Zeichnung näher erläutert. In der Zeichnung zeigen:

Fig. 1: eine schematische Darstellung eines Bioreaktors, der aus dem Stand der Technik bekannt ist,

Fig. 2: eine perspektivische Darstellung eines ersten Ausführungsbeispiels eines Rotors mit daran angeordneten Förderelementen, der mit einem erfindungsgemässen Verfahren hergestellt ist,

Fig. 3: eine Schnittdarstellung des Ausführungsbeispiels aus Fig. 2 in einem Schnitt entlang der axialen Richtung,

Fig. 4: eine perspektivische Darstellung einer Variante für die Ausgestaltung des magnetisch wirksamen Kerns,

Fig. 5: eine schematische Schnittdarstellung eines Laufrads, welches für ein erfindungsgemässes Verfahren verwendet werden kann,

Fig. 6: das Laufrad aus Fig. 5 nach Entfernen aller Laufradelemente,

Fig. 7: eine Variante für die Ausgestaltung des magnetisch wirksamen Kerns des Laufrads,

Fig. 8: eine schematische Schnittdarstellung eines zweiten Ausführungsbeispiels eines Rotors, der mit einem erfindungsgemässen Verfahren hergestellt ist,

Fig. 9 eine schematische Schnittdarstellung eines dritten Ausführungsbeispiels eines Rotors, der mit einem erfindungsgemässen Verfahren hergestellt ist,

Fig. 10 eine schematische Schnittdarstellung eines vierten Ausführungsbeispiels eines Rotors, der mit einem erfindungsgemässen Verfahren hergestellt ist,

Fig. 11 eine schematische Darstellung einer Magnetisierungsvorrichtung mit einer ersten Variante einer Spuleneinheit,

Fig. 12 eine schematische Schnittdarstellung entlang der Schnittlinie C-C' der Spuleneinheit aus Fig. 11,

Fig. 13 eine schematische Darstellung eines geöffneten Fixierungselements für einen Rotor/-Laufrad,

Fig. 14 eine schematische Darstellung einer zweiten Variante einer Spuleneinheit, und

Fig. 15 eine schematische Darstellung einer dritten Variante einer Spuleneinheit.

Wie bereits vorangehend erläutert, zeigt Fig. 1 eine schematische Darstellung eines Bioreaktors 100', der aus dem Stand der Technik bekannt ist. Der Bioreaktor 100' umfasst eine Mischvorrichtung mit einem berührungslos magnetisch gelagerten und berührungslos magnetisch angetriebenen Flügelrad 1' zum Durchmischen von mindestens zwei Substanzen.

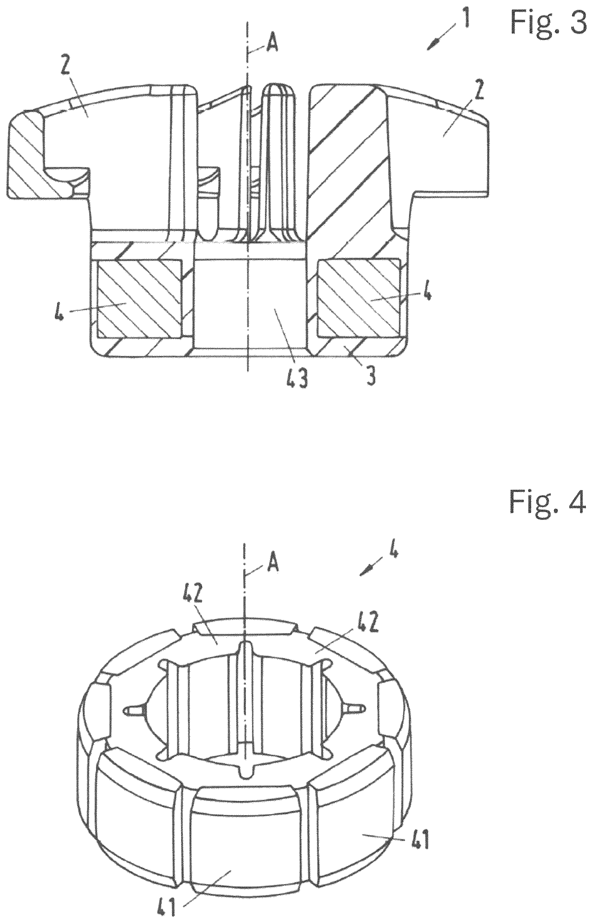

Fig. 2 zeigt in einer perspektivischen Darstellung ein Ausführungsbeispiels eines Rotors mit daran angeordneten Förderelementen, das mit einem erfindungsgemässen Verfahren hergestellt ist. Der Rotor ist gesamthaft mit dem Bezugszeichen 1 bezeichnet. Der Rotor 1 ist für eine Rotation um eine axiale Richtung A ausgestaltet. Zum besseren Verständnis zeigt Fig. 3 den Rotor 1 aus Fig. 2 in einer Schnittdarstellung, wobei der Schnitt entlang der axialen Richtung A erfolgt.

Der Rotor 1 ist als Flügelrad für eine Pumpvorrichtung zum Fördern eines Fluids oder für eine Mischvorrichtung zum Mischen von mindestens zwei fliessfähigen Substanzen ausgestaltet. Insbesondere kann der Rotor 1 für einen solchen Bioreaktor 100' mit einer Mischvorrichtung ausgestaltet sein, wie er in Fig. 1 dargestellt ist. Der Begriff "fliessfähige Substanzen" umfasst neben Fluiden insbesondere auch pulverförmiger Substanzen. Die Mischvorrichtung kann also insbesondere auch für das Mischen von einem Pulver und einer Flüssigkeit verwendet werden, z. B., um das Pulver in der Flüssigkeit aufzulösen.

Insbesondere ist der Rotor 1 für eine vorzugsweise berührungslose magnetische Lagerung sowie für einen berührungslosen Antrieb zu Rotation um die axiale Richtung A ausgestaltet. Der Rotor 1 ist beispielsweise in den Stator 130' (Fig. 1) einsetzbar, der als Lager- und Antriebsstator ausgestaltet. Der Rotor 1 bildet dann mit dem Stator 130' einen elektromagnetischen Drehantrieb, wobei der Rotor 1 im Betriebszustand berührungslos magnetisch zur Rotation um die axiale Richtung A antreibbar und bezüglich des Stators 130' berührungslos magnetisch lagerbar ist.

Der in Fig. 2 und Fig. 3 dargestellte Rotor 1 ist für einen elektromagnetischen Drehantrieb ausgestaltet, welcher als Innenläufer konfiguriert ist, das heisst der Stator 130' ist um den Rotor herum angeordnet. Natürlich ist es auch möglich, dass der Rotor 1 für einen elektromagnetischen Drehantrieb ausgestaltet ist, welcher als Aussenläufer konfiguriert ist, das heisst, der Stator ist radial innenliegend im Rotor 1 angeordnet, sodass sich der Rotor 1 in Umfangsrichtung um den Stator herum erstreckt. Eine solche Konfiguration als Aussenläufer ist beispielsweise in Fig. 2 der EP 3 115 103 A1 gezeigt.

Der Rotor 1 umfasst einen magnetisch wirksamen Kern 4 und eine Umkapselung 3, welche aus einem Kunststoff besteht und welche den magnetisch wirksamen Kern 4 vollständig umschliesst. Durch die Umkapselung 3 ist somit gewährleistet, dass der magnetisch wirksame Kern 4 im Betriebszustand nicht mit dem geförderten Fluid oder den zu mischenden Substanzen in Kontakt kommt.

Auf der Umkapselung 3 ist eine Mehrzahl von Förderelementen 2, welcher hier als Flügel ausgestaltet sind, angeordnet, die auf der Umkapselung 3 fixiert sind. Bei dem in Fig. 2 und Fig. 3 dargestellten Ausführungsbeispiel sind mit beispielhaftem Charakter genau fünf Förderelemente 2 vorgesehen. Es versteht sich, dass in anderen Ausgestaltungen des Rotors 1 mehr als fünf oder weniger als fünf Förderelementen 2 vorgesehen sein können. Auch ist die Ausgestaltung der einzelnen Förderelemente 2 wie sie insbesondere in Fig. 2 gut zu erkennen ist, rein beispielhaften Charakter hat. Es gibt eine grosse Vielzahl von Möglichkeiten für die Ausgestaltung der einzelnen Förderelemente.

Die Förderelemente 2 bestehen vorzugsweise aus Kunststoff und können beispielsweise einstückig mit der Umkapselung 3 ausgestaltet sein. Natürlich ist es auch möglich, die individuellen Förderelemente 2 oder die Gesamtheit der Förderelemente 2 in einem separaten Fertigungsprozess herzustellen und sie dann mit der Umkapselung 3 des magnetisch wirksamen Kerns 4 zu verbinden, beispielsweise mittels eines Schweissprozesses.

Der magnetisch wirksame Kern 4 ist bei dem hier beschriebenen Ausführungsbeispiel des Rotors 1 als permanentmagnetischer Ring ausgestaltet mit einer zentralen Öffnung 43. In anderen Ausgestaltungen ist der magnetisch wirksame Kern 4 als eine magnetisch wirksame Scheibe ausgestaltet.

Mit dem "magnetisch wirksamen Kern" 4 des Rotors 1 ist derjenige Bereich des Rotors 1 gemeint, welcher für die Erzeugung der magnetischen Lagerkräfte und für die Drehmomentbildung magnetisch mit dem Stator 130' zusammenwirkt.

Der magnetisch wirksame Kern 4 umfasst mindestens einen Permanentmagneten. Es sind auch Ausgestaltungen möglich, bei denen der magnetisch wirksame Kern 4 mehrere Permanentmagnete 41 umfasst (siehe z. B. Fig. 4). Bei dem in Fig. 2 und Fig. 3 dargestellten Ausführungsbeispiel des Rotors 1 besteht der magnetisch wirksame Kern 4 vollständig aus einem permanentmagnetischen Material, sodass der magnetisch wirksame Kern 4 der Permanentmagnet ist. Der magnetisch wirksame Kern 4 ist beispielsweise in radialer Richtung magnetisiert.

Als Permanentmagnete bezeichnet man üblicherweise solche ferromagnetischen oder ferrimagnetischen Werkstoffe, die hartmagnetisch sind, also eine hohe Koerzitivfeldstärke aufweisen. Die Koerzitivfeldstärke ist diejenige magnetische Feldstärke, die man benötigt, um einen Stoff zu entmagnetisieren. Im Rahmen dieser Anmeldung wird unter einem Permanentmagneten ein Werkstoff bzw. ein Material verstanden, der eine Koerzitivfeldstärke, genauer gesagt eine Koerzitivfeldstärke der magnetischen Polarisation aufweist, die mehr als 10'000 A/m beträgt.

Es sind auch solche Ausgestaltungen möglich, bei denen der magnetisch wirksame Kern 4 des Rotors 1 sowohl weichmagnetische Materialien als auch permanentmagnetische Materialien umfasst. Fig. 4 zeigt eine perspektivische Darstellung einer solchen Variante für die Ausgestaltung des magnetisch wirksamen Kerns 4.

Der magnetisch wirksame Kern 4 umfasst einen Grundkörper 42, an welchem oder in welchem eine Mehrzahl von Permanentmagneten 41 angeordnet sind. Der Grundkörper 42, der bei der in Fig. 4 dargestellten Variante ringförmig ausgestaltet ist, besteht aus einem weichmagnetischen Material, vorzugsweise einem ferromagnetischen oder einem ferrimagnetischen. Als weichmagnetisch Materialien sind insbesondere Eisen, Nickel-Eisen, Kobalt-Eisen, Silizium-Eisen oder Mu-Metall geeignet. Der magnetisch wirksame Kern 4 umfasst ferner eine Mehrzahl von Permanentmagneten 41, hier mit beispielhaftem Charakter acht Permanentmagnete 41. Jeder Permanentmagnet 41 ist segmentförmig ausgestaltet. Die Permanentmagnete 41 sind radial aussenliegend entlang der Umfangsfläche an dem Grundkörper 42 angeordnet und an dem Grundkörper 42 befestigt, beispielsweise mittels einer Klebeverbindung. Der Grundkörper 42 dient als ringförmiger Rückschluss zur Führung des magnetischen Flusses zwischen den Permanentmagneten 41.

Es sind auch solche Ausgestaltungen des magnetisch wirksamen Kerns möglich, bei welchen der Grundkörper 42 radial aussenliegend angeordnet ist und die Permanentmagnet 41 in Umfangsrichtung umgibt. Auch ist es möglich, dass der Grundkörper 42 Ausnehmungen aufweist, in welche die Permanentmagnete 41 eingelegt oder eingesetzt werden.

Solche Ausgestaltungen, bei welchen der magnetisch wirksame Kern 4 nicht vollständig aus einem permanentmagnetischen Material besteht, sondern beispielsweise aus dem ferromagnetischen Grundkörper 42 und den Permanentmagneten 41 sind z.B. vorteilhaft, wenn man bei grossen Flügelrädern 1 die Kosten durch Einsparen von permanentmagnetischem Material reduzieren will.

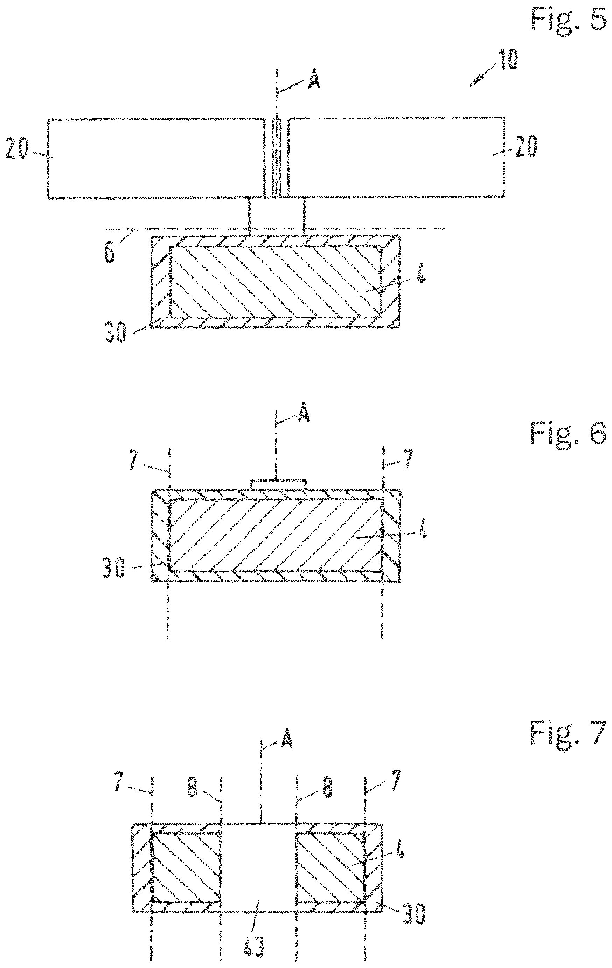

Im Folgenden wird ein Ausführungsbeispiel eines erfindungsgemässen Verfahrens zur Herstellung eines Rotors, beispielsweise des in Fig. 2 und Fig. 3 dargestellten Rotors 1, welcher als Flügelrad ausgestaltet ist, anhand der Fig. 5 - Fig. 7 näher erläutert.

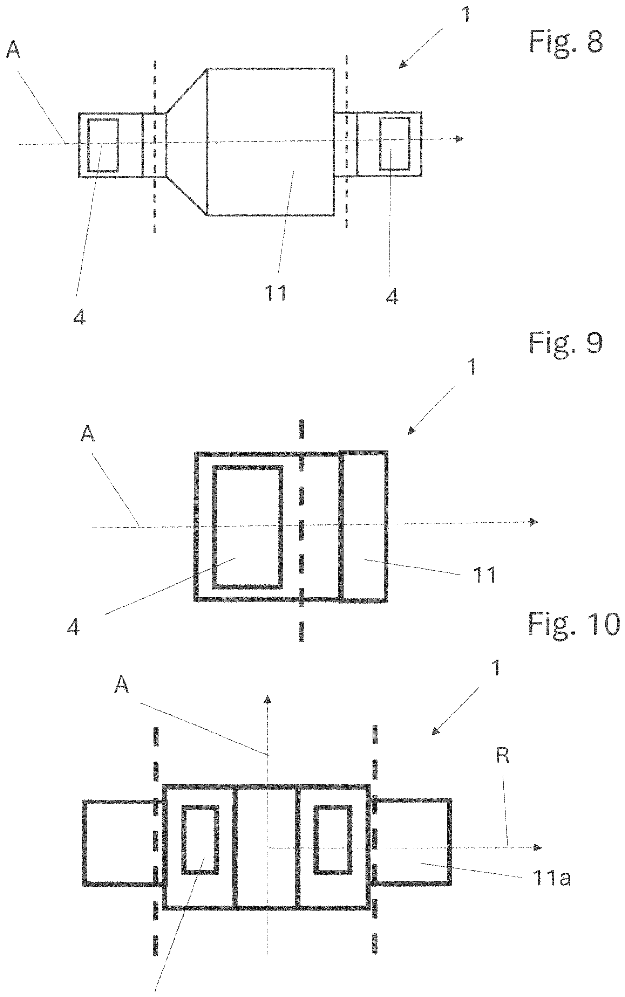

Es ist aber ebenso möglich, dass das erfindungsgemässe Verfahren auch für Rotoren, die z.B. nach den Ausführungsbeispielen in den Fig. 8-10 ausgestaltet sind, angewandt werden kann.

Zunächst wird in einem ersten Verfahrensschritt ein magnetisch lagerbares Laufrad 10 bereitgestellt, welches einen magnetisch wirksamen Kern 4 aufweist, der von einer Ummantelung 30 vollständig umschlossen wird, wobei die Ummantelung 30 aus einem Kunststoff besteht. Auf der Ummantelung 30 ist eine Mehrzahl von Laufradelementen 20 zur Wechselwirkung mit einem Fluid und/oder einer oder mehreren Substanzen vorgesehen. Das Laufrad 10 ist beispielsweise das Laufrad 10 einer Pumpvorrichtung zum Fördern eines Fluids oder das Laufrad 10 einer Mischvorrichtung zum Mischen von mindestens zwei fliessfähigen Substanzen.

Das Laufrad 10 kann insbesondere auch ein Flügelrad 1' (Fig. 1) sein oder ein Rotor 1, wie es anhand der Fig. 2 und Fig. 3 beschrieben ist. Insbesondere wenn das Laufrad 10 für den Einmalgebrauch ausgestaltet ist, so ist das Laufrad 10 vorzugsweise ein Einmalteil, beispielsweise ein Flügelrad und/oder Rotor 1, 1', das bereits für eine Anwendung benutzt wurde und nun durch ein neues, das heisst unbenutztes, ersetzt werden muss.

Das Laufrad 10 ist also vorzugsweise, aber nicht notwendigerweise, ein solches Laufrad, das für den Einmalgebrauch ausgestaltet worden ist und bereits einmal benutzt worden ist. Anstelle das komplette Laufrad 10 zu entsorgen, wird nun vorgeschlagen, den magnetisch wirksamen Kern 4 vom Rest des Laufrads 10 zu trennen, und den magnetisch wirksamen Kern 4 dann für die Herstellung eines neuen Rotors 1 zu verwenden, insbesondere eines solchen Rotors 1, das für den Einmalgebrauch ausgestaltet ist.

Fig. 5 zeigt in einer schematischen Schnittdarstellung das Laufrad 10, welches für das hier beschriebene Ausführungsbeispiel verwendet wird. Nachdem das Laufrad 10 bereitgestellt ist, werden in einem nächsten Verfahrensschritt alle Laufradelemente 20 von der Ummantelung 30 entfernt. Dies kann beispielsweise erfolgen, indem die Laufradelemente 20 mechanisch entfernt werden, z.B. durch Schneiden entlang der gestrichelten Linie 6 in Fig. 5. Fig. 6 zeigt das Laufrad 10 aus Fig. 5 nach Entfernen aller Laufradelemente 20.

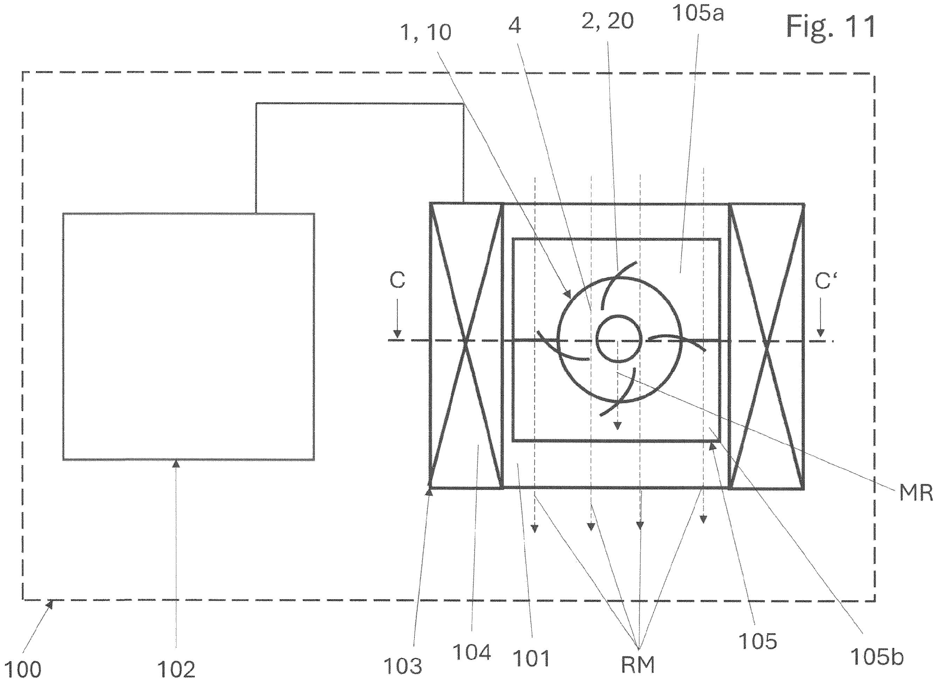

In einem nächsten Verfahrensschritt wird eine Magnetisierungsvorrichtung 100 (Fig. 11) bereitgestellt, welche für die Entmagnetisierung des magnetisch wirksamen Kerns 4 vorgesehen ist. Die Magnetisierungsvorrichtung 100 umfasst eine Aufnahme 101, in welche das Laufrad 10 eingesetzt wird und anschliessend der magnetisch wirksame Kern 4 entmagnetisiert, wird.

Besonders bevorzugt erfolgt die Entmagnetisierung bereits vor dem Entfernen der Laufradelemente 20 von der Ummantelung 30. Die Entmagnetisierung des magnetisch wirksamen Kerns 4 hat den Vorteil, dass die weitere Bearbeitung, beispielsweise die Bearbeitung mit metallischen Werkzeugen und Maschinen deutlich einfacher ist, wenn der magnetisch wirksame Kern 4 entmagnetisiert ist. Zudem lässt sich auch die Gefahr vermeiden, dass während der Bearbeitung Verschmutzungen durch den magnetisch wirksamen Kern 4 angezogen werden und sich anlagern.

Das Entfernen der Laufradelemente 20 oder Teile davon vor der Entmagnetisierung ist beispielsweise dann bevorzugt, wenn die Laufradelemente 20 durch ihre Grösse in der Magnetisierungsvorrichtung 100 zu einem schlechten Ausnutzungsgrad des Entmagnetisierungsfeld führen. Dies wäre z.B. der Fall, wenn das Laufrad 10 mit Laufradelementen 20 zu gross ist und nicht in die Magnetisierungsvorrichtung 100 passen würden oder durch die Dimensionen der Laufradelemente 20 eine grössere Magnetisierungsvorrichtung 100 benötigen würde. Ein weiterer Vorteil des Entfernens der Laufradelemente 20 oder Teilen davon vor der Entmagnetisierung ist z.B. auch, dass es möglich ist, dass mehrere magnetisch wirksame Kerne 4 in die Magnetisierungsvorrichtung 100 eingebracht werden können.

Die Entmagnetisierung des magnetisch wirksamen Kerns 4 erfolgt vorzugsweise mittels elektromagnetischer Wechselfelder. Der Prozess der Entmagnetisierung kann dabei in mehreren Schritten erfolgen. Die Entmagnetisierung erfolgt vorzugsweise so lange, bis die Remanenz des magnetisch wirksamen Kerns verschwindet oder zumindest näherungsweise gleich null ist, bevorzugt kleiner als 40% des Ursprungswertes und besonders bevorzugt kleiner als 10% des Ursprungswertes. Wie bereits erwähnt, ist mit dem Begriff "Entmagnetisierung" eine Reduzierung des magnetischen Moments des magnetisch wirksamen Kerns 4 auf einen Wert gemeint, welcher bevorzugt höchstens 40% und besonders bevorzugt höchstens 10% des magnetischen Moments beträgt, das der magnetisch wirksame Kern 4 bei vollständiger Magnetisierung aufweist.

Eine detaillierte Beschreibung der Funktionsweise der Magnetisierungsvorrichtung 100 ist in der Figurenbeschreibung der Figuren 11-15 zu finden.

In einem nächsten Verfahrensschritt wird nun der magnetisch wirksame Kern 4 von der Ummantelung 30 getrennt. In Fig. 5 und Fig. 6 ist der magnetisch wirksame Kern 4 als eine Scheibe ausgestaltet. Fig. 7 zeigt in einer zu Fig. 6 analogen Darstellung eine Ausgestaltung des magnetisch wirksamen Kerns 4 als ein Ring also mit der zentralen Öffnung 43.

Der magnetisch wirksame Kern 4, welcher einen Durchmesser in radialer Richtung R und eine axiale Höhe aufweist, wobei die axiale Höhe die Erstreckung des magnetisch wirksamen Kerns 4 in axialer Richtung A angibt, wird bevorzugt bezüglich Verkippung passiv magnetisch lagerbar ausgeführt. Dies wird erreicht, indem der magnetisch Wirksame Kern 4 bevorzugt einen Durchmesser aufweist, welcher grösser ist als die doppelte axiale Höhe.

Für das Trennen des magnetisch wirksamen Kerns 4 gibt es zahlreiche Möglichkeiten, von denen im Folgenden einige genannt werden.

Insbesondere sind mechanische Bearbeitungsverfahren geeignet. So kann der magnetisch wirksame Kern 4 beispielsweise mittels einer mechanischen Pressvorrichtung aus der Ummantelung 30 herausgepresst werden. Dazu wird beispielsweise die Ummantelung 30 mit dem darin angeordneten Kern 4 derart in eine mechanische Pressvorrichtung eingelegt, dass die Pressvorrichtung eine in axialer Richtung A wirkende Kraft insbesondere auf den Bereich ausübt, in welchem der magnetisch wirksame Kern 4 angeordnet ist. Dieser Bereich ist in Fig. 6 durch die beiden gestrichelten Linien mit dem Bezugszeichen 7 angedeutet. Der magnetisch wirksame Kern 4 wird dann mittels der Pressvorrichtung entlang der Linien 7 in axialer Richtung A durch die Ummantelung 30 hindurch gedrückt und kann auf diese Weise von der Ummantelung 30 getrennt werden.

Alternativ oder ergänzend ist es auch möglich, den magnetisch wirksamen Kern 4 mittels eines zerspanenden oder spanabhebenden Prozesses von der Ummantelung 30 zu trennen. Solche mechanischen Prozesse umfassen beispielsweise Schneiden, Bohren, Sägen, Fräsen, Drehen oder Schleifen. Beispielsweise kann die Ummantelung entlang der Linien 7 aufgeschnitten werden oder bis auf die Linien 7 abgeschliffen oder weggefräst werden.

Falls der magnetisch wirksame Kern 4 ringförmig ausgestaltet ist und somit die zentrale Öffnung 43 aufweist, erfolgt das Trennen des magnetisch wirksamen Kerns 4 vorzugsweise in zwei separaten Schritten. Zunächst wird eine zentrale Bohrung entlang der gestrichelt dargestellten Linien 8 in Fig. 7 durchgeführt, um die Ummantelung 30 aus der zentralen Öffnung 43 des magnetisch wirksamen Kerns 4 zu entfernen. Diese Bohrung kann mit einem Schleifen oder Fräsen kombiniert werden. Nachdem die Ummantelung 30 aus der zentralen Öffnung 43 entfernt ist - so wie es in Fig. 7 dargestellt ist - erfolgt die weitere Trennung des magnetisch wirksamen Kerns 4 von der Ummantelung 30 wie vorangehend beschrieben, also beispielsweise mittels der mechanischen Pressvorrichtung, mit welcher der magnetisch wirksame Kern 4 aus der Ummantelung 30 herausgedrückt wird.

Alternativ zu oder in Kombination mit der mechanischen Bearbeitung zum Trennen des magnetisch wirksamen Kerns 4 von der Ummantelung 30 ist auch eine thermische Bearbeitung möglich, um den magnetisch wirksamen Kern 4 von der Ummantelung 30 zu trennen.

Beispielsweise kann die aus einem Kunststoff bestehende Ummantelung 30 durch Zufuhr von Wärme aufgeschmolzen werden, sodass der magnetisch wirksame Kern 4 aus der Ummantelung 30 herausgenommen werden kann. Es ist aber auch möglich, die thermische Bearbeitung mit einer mechanischen Bearbeitung zu kombinieren. Beispielsweise kann die Ummantelung 30 durch Wärmezufuhr aufgeweicht oder plastifiziert werden und dann der magnetisch wirksame Kern 4 mit einer mechanischen Pressvorrichtung aus der Ummantelung 30 heraus gedrückt werden.

Nachdem der magnetisch wirksame Kern 4 vollständig von der Ummantelung 30 getrennt ist, und optional gereinigt ist, dient er als Ausgangskomponente für die Herstellung eines neuen Rotors 1. Die Fertigstellung des Rotors 1 kann dann beispielsweise in sinngemäss gleicher Weise erfolgen, wie dies mit einem neuen, das heisst vorher noch nicht verwendeten, magnetisch wirksamen Kern 4 erfolgt.

Der magnetisch wirksame Kern 4 wird mit der Umkapselung 3 (Fig. 2, Fig. 3) aus einem Kunststoff versehen, welche den magnetisch wirksamen Kern 4 vollständig und vorzugsweise hermetisch dicht umschliesst. Anschliessend wird die Mehrzahl von Förderelementen 2 auf der Umkapselung 3 angebracht und fixiert.

Für die Herstellung der Umkapselung 3 sind mehrere Prozesse möglich. Beispielsweise kann der magnetisch wirksame Kern 4 mit einem Kunststoff umspritzt werden. Dies kann insbesondere in einem Spritzgiessprozess in einer Spritzgiessvorrichtung erfolgen.

Besonders bevorzugt werden die Umkapselung 3 und das mindestens eine Förderelemente 2 in einem einzigen Spritzgiessprozess gefertigt. Das bedeutet, dass in einem einzigen Spritzgiessprozess die Umkapselung 3 und das mindestens eine Förderelement 2 gemeinsam hergestellt werden. Natürlich ist es optional möglich, dass die endgültige Form des mindestens einen Förderelements 2 und/oder der Umkapselung 3 nach diesem Spritzgiessprozess durch eine mechanische Nachbearbeitung, beispielsweise durch eine spanabhebende Bearbeitung, erzeugt wird.

Ferner ist es möglich, die Umkapselung 3 durch das Fügen mehrerer Komponenten herzustellen. So kann die Umkapselung 3 beispielsweise einen formstabilen Becher und einen formstabilen Deckel umfassen, der zum Verschliessen des Bechers ausgestaltet ist. Der magnetisch wirksame Kern 4 wird dann in den Becher eingelegt, der Deckel auf den Becher aufgesetzt und dann durch einen Fügeprozess fest mit dem Becher verbunden. Der Fügeprozess ist beispielsweise ein Schweissprozess wie Infrarotschweissen. Das Fügen kann aber auch mit anderen Verfahren erfolgen, beispielsweise mittels Klebens oder mittels Verschraubens.

Eine weitere Möglichkeit ist es, die Umkapselung 3 mit einem Sinterprozess herzustellen. Die Umkapselung wird dann aus einem Pulver oder aus einem Granulat hergestellt, das unter Anwendung von Druck und optional eine Temperaturbehandlung auf den magnetisch wirksamen Kern 4 gepresst wird, derart, dass der magnetisch wirksame Kern 4 vollständig umschlossen wird. Diese Möglichkeit eignet sich insbesondere auch, wenn der Kunststoff aus dem die Umkapselung 3 besteht, nicht mit einem Spritzgiessverfahren verarbeitet werden kann, wie dies beispielsweise für Polytetrafluorethylen (PTFE) der Fall ist.

Nachdem die Umkapselung fertiggestellt ist, wird das mindestens eine Förderelement 2 auf der Umkapselung 3 fixiert, beispielsweise durch Schweissen.

Insbesondere für Anwendungen in der pharmazeutischen Industrie oder in der biotechnologischen Industrie, beispielsweise für Anwendungen in einem Bioreaktor, sind für die Umkapselung 3 und/oder für das mindestens eine Förderelement 2 biokompatible Kunststoffe bevorzugt, insbesondere Polyethylen (PE) oder Polypropylen (PP).

Natürlich sind auch andere Kunststoffe geeignet, wie beispielsweise PolyVinylChlorid (PVC), Low Density PolyEthylene (LDPE), Ultra Low Density PolyEthylene (ULDPE), High Density PolyEthylene (HDPE), Ethylene Vinyl Acetate (EVA), PolyEthylene Terephthalate (PET), PolyVinyliDene Fluoride (PVDF), Acrylonitrile Butadiene Styrene (ABS), PolyAcryl(PA), PolyCarbonate (PC), Polysulfone wie beispielsweise Polysulfon (PSU).

Da der magnetisch wirksame Kern 4 vor dem Trennen von der Ummantelung 30 entmagnetisiert wurde, wird, nachdem die Umkapselung 3 fertiggestellt ist, der magnetisch wirksame Kern 4 mit der Magnetisierungsvorrichtung 100 wieder magnetisiert. Die Magnetisierung des magnetisch wirksamen Kerns 4 kann vor oder nach dem Anbringen der Förderelemente 2 erfolgen.

Das erfindungsgemässe Verfahren eignet sich insbesondere, aber nicht nur, für solche Rotoren 1, die für den Einmalgebrauch ausgestaltet sind. Nachdem der Rotor 1 gebraucht worden ist, kann der magnetisch wirksame Kern 4 herausgetrennt und für die Herstellung eines neuen Rotors 1 wiederverwendet werden, wobei dieser neue Rotor 1 dann auch wieder für den Einmalgebrauch ausgestaltet sein kann.

Fig. 8 zeigt eine schematische Schnittdarstellung eines zweiten Ausführungsbeispiels, eines Rotors, der mit einem erfindungsgemässen Verfahren hergestellt ist. Hierbei handelt es sich um einen Rotor 1, welcher derart ausgestaltet ist, dass für eine Zentrifuge verwendet wird. Dabei umfasst der Rotor 1 einen Rotorkörper 11.

Fig. 9 zeigt eine schematische Schnittdarstellung eines dritten Ausführungsbeispiels eines Rotors, der mit einem erfindungsgemässen Verfahren hergestellt ist. Hierbei handelt es sich um einen Rotor 1 eines Viskositätssensors. Dieser weist ebenfalls einen Rotorkörper 11 auf.

Fig. 10 zeigt eine schematische Schnittdarstellung eines vierten Ausführungsbeispiels eines Rotors, der mit einem erfindungsgemässen Verfahren hergestellt ist. Hierbei handelt es sich um einen Rotor 1 eines Lüfters. Dieser weist ebenfalls einen Rotorkörper 11 mit daran angebrachten Lüfterflügeln 11a auf.

Es versteht sich, dass gleiche Teile oder von der Funktion her gleichwertige Teile der Ausführungsbeispiele mit den gleichen Bezugszeichen bezeichnet sind. Insbesondere haben die Bezugszeichen die gleiche Bedeutung wie sie bereits im Zusammenhang mit anderen Ausführungsbeispielen erläutert sind. Es versteht sich, dass alle Erläuterungen zu den anderen Ausführungsbeispiele in gleicher Weise oder in sinngemäss gleicher Weise auch für die jeweiligen anderen Ausführungsbeispiele gelten.

Es versteht sich, dass der Rotor 1 nach dem Ende seiner Lebensdauer bzw. seiner Verwendungszeit ein Laufrad 10 darstellt, welches für die Durchführung des erfindungsgemässen Verfahrens bereitgestellt werden muss. Das heisst, auch die in Fig. 8-10 gezeigten Ausführungsbeispiele von Rotoren können rezykliert werden und der magnetisch wirksame Kern 4 wiederverwendet werden. Die gestrichelten Linien stellen dabei die Trennlinien dar, entlang welcher der Rotorkörper 11 getrennt wird, bevor der anschliessend verbleibende Rest als Laufrad 10 für das erfindungsgemässe Verfahren bereitgestellt werden kann. Es versteht sich, dass der Entmagnetisierungsschritt auch vor dem Abtrennen erfolgen kann.

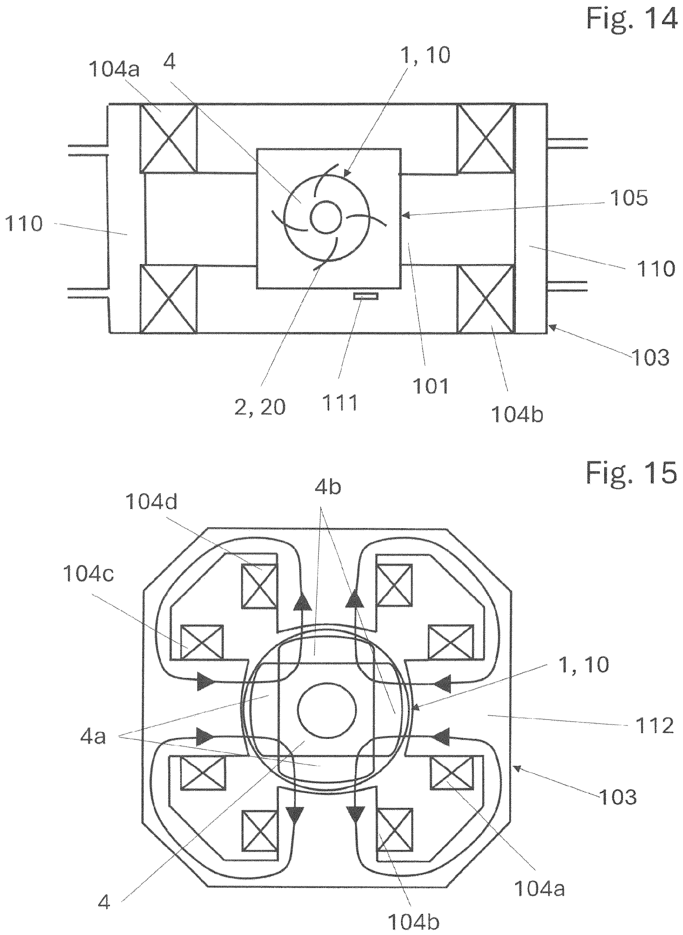

Fig. 11 zeigt eine schematische Darstellung einer Magnetisierungsvorrichtung 100 mit einer ersten Variante einer Spuleneinheit 103 zur Durchführung des erfindungsgemässen Verfahrens. Die Magnetisierungsvorrichtung 100 umfasst eine Generatoreinheit 102, eine Spuleneinheit 103 und eine Aufnahme 101, in welche das Laufrad 10 und/oder der Rotor 1 einsetzbar sind und womit der magnetisch wirksame Kern 4 entmagnetisiert und/oder magnetisiert werden kann. Es wird im Nachfolgenden der Entmagnetisierungsvorgang erläutert. Das heisst in die Magnetisierungsvorrichtung ist ein Laufrad 10 eingesetzt, dessen magnetisch wirksamer Kern 4 entmagnetisiert werden soll. Die Spuleneinheit 103 umfasst die Aufnahme 101 und in diesem Ausführungsbeispiel eine Spule 104. In anderen Ausführungsbeispielen sind aber auch Ausgestaltungen mit mehr als einer Spule 104 möglich, wie z.B. in den Varianten in Fig. 14 und Fig. 15 dargestellt. Dies kann vorteilhaft sein, da dadurch die Homogenität des Ent-/Magnetisierungsfelds optimiert werden kann. In Fig. 14 sind z.B. zwei Spulen 104a, 104b vorhanden.

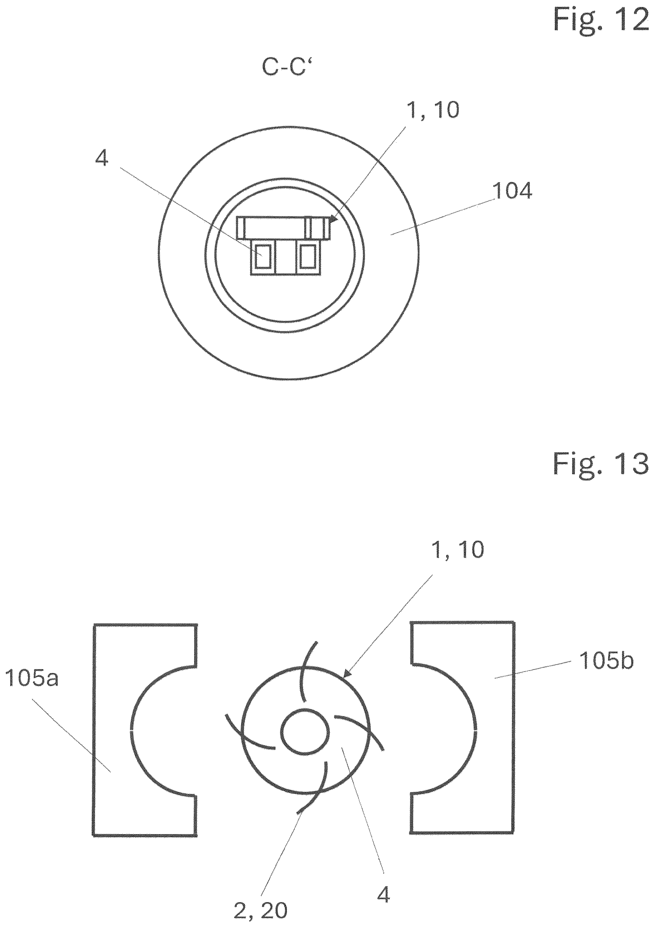

Zum besseren Verständnis ist in Fig. 12 eine schematische Schnittdarstellung entlang der Schnittlinie C-C' der Spuleneinheit 103 aus Fig. 11 dargestellt.

In die Aufnahme 101 ist in diesem Ausführungsbeispiel ein Fixierungselement 105 eingesetzt, in welchem das Laufrad 10 in einer vorgegebenen Position fixiert ist. Es sind aber auch Ausgestaltungen möglich, bei denen die Aufnahme 101 Fixierungselemente umfasst, welche mit der Aufnahme 101 festverbunden sind.

Durch die Fixierung des Laufrads 10 sind während des Ent-/Magnetisierungsvorgangs keine Translation- und/oder Rotationsbewegungen des Laufrads 10 möglich. Dies ist vorteilhaft, da dadurch ein Ausrichten des magnetisch wirksamen Kerns 4 von der vorgegebenen Anordnung durch die vorgegebenen Feldrichtung des Entmagnetisierungsfelds über den gesamten Entmagnetisierungsvorgang verhindert wird. Gerade bei der Entmagnetisierung ist dies vorteilhaft, da hier ein Gegenfeld zum Feld des magnetisch wirksamen Kerns 4 erzeugt wird und dieser dadurch ohne Fixierung rotieren könnte, wodurch die Entmagnetisierung nicht zuverlässig funktionieren könnte. In dieser Variante der Spuleneinheit 103 ist das Fixierungselement 105 zweiteilig, als ein Oberteil 105a und Unterteil 105b ausgestaltet. Dabei kann das Oberteil 105a und Unterteil 105b durch eine kraftschlüssige Verbindung und/oder eine formschlüssige Verbindung miteinander verbunden werden. Hierzu zählen unter anderem Klemmen, Pressen, Schrauben, Einklinken. Ebenso sind Verschlussmechanismen möglich wie z.B. Scharniere.

Fig. 13 zeigt eine schematische Darstellung eines geöffneten Fixierungselements 105 für einen Rotor 1 und/oder ein Laufrad 10. Dabei ist zu erkennen, dass eine Innenform des Fixierungselements 105 bzw. des Oberteils 105a und des Unterteils 105b an die äussere Form des Rotors 1 bzw. des Laufrads 10 angepasst ist, um so eine zuverlässige Fixierung des Rotors 1 bzw. des Laufrads 10 zu erhalten. Es versteht sich, dass hierbei nicht nur kreisförmige bzw. halbkreisförmige Innenformen des Fixierungselements 105 möglich sind, sondern jegliche geometrische Formen. So kann die Innenform z.B. auch rechteckig und/oder oval sein. Die Innenform kann auch Strukturen aufweisen, die z.B. eine Fixierung über Laufradelemente wie z.B. Flügel ermöglicht. Das Fixierungselement 105 ist bevorzugterweise aus Materialien hergestellt, welche mit einem Magnetfeld nicht interferieren, d.h. eine tiefe magnetische Permeabilität aufweisen. Weiterhin ist es bevorzugt, wenn diese Materialien eine geringe elektrische Leitfähigkeit aufweisen um Abschirmeffekte und/oder Feldverzerrungen durch Wirbelströme zu vermeiden.

In anderen Ausführungsbeispielen kann das Fixierungselement 105 auch zylinderförmig ausgestaltet sein. Dies ist vorteilhaft für Laufräder 10 und/oder Rotoren 1, welche eine zentrale Öffnung 43 aufweisen. Diese können dann einfach auf das Fixierungselement 105 aufgesteckt werden.

In anderen Ausführungsbeispielen kann das Fixierungselement 105 auch ein Teil eines Transportsystems sein, welches mindestens ein Fixierungselement 105, bevorzugt auch mehrere Fixierungselemente 105 umfasst, wobei das Transportsystem derart angeordnet ist, dass das mindestens eine Fixierungselement 105 durch die Spuleneinheit 103 hindurchgefördert wird. Das heisst, das Transportsystem kann ein Förderband umfassen, auf welchem mindestens ein Fixierungselement 105 angeordnet ist und dieses Förderband transportiert dann das Laufrad 10 und/oder den Rotor 1, welcher im Fixierungselement 105 fixiert ist, durch das Magnetfeld der Spuleneinheit 103. Dadurch wird eine Art Fliessbandarbeit für die Entmagnetisierung des magnetisch wirksamen Kerns 4 erreicht, wodurch der Entmagnetisierungsprozess erheblich beschleunigt werden kann.

Weiterhin kann die Aufnahme 101 und/oder das Fixierungselement 105 mindestens einen Sensor 111 (Fig. 14) aufweisen, welcher den Entmagnetisierungsprozess überwacht. Hierbei kann der mindestens eine Sensor 111 z.B. kontrollieren, ob das Laufrad 10 und/oder der Rotor 1 entsprechend der gewünschten vorgegebenen Position eingesetzt ist. Das heisst er kann z.B. die Magnetisierung des magnetisch wirksamen Kerns 4 messen. Weiterhin kann der Sensor 111 den Verlauf der Entmagnetisierung des magnetisch wirksamen Kerns 4 messen. Das heisst der Sensor kann ein Magnetfeldsensor sein.

Bevorzugterweise stellt die vorgegebene Position eine Magnetisierungsposition, wobei in der Magnetisierungsposition die Magnetisierungsrichtung MR des magnetisch wirksamen Kerns 4 parallel zur einer Richtung RM ausgerichtet ist, wobei die Richtung RM die Feldrichtung des Entmagnetisierungsfelds darstellt.

Die Erzeugung des Magnetfelds wird bevorzugterweise durch einen Schwingkreis, welchen die Magnetisierungsvorrichtung umfasst bewerkstelligt. Der Schwingkreis umfasst dabei mindestens ein Widerstandsbauteil mit einem elektrischen Widerstand R, mindestens ein Kapazitätsbauteil mit einer Kapazität C und mindestens ein Induktivitätsbauteil mit einer Induktivität I umfasst, wobei der Schwingkreis einen Schwingkreiskennwert SK aufweist, wobei der Schwingkreiskennwert SK während dem Entmagnetisieren die Beziehung

$$SK = \frac{R}{2} \cdot \sqrt{\frac{C}{L}} < 1$$

erfüllen muss. Beim Magnetisieren kann der Schwingkreiskennwert SK einen anderen Wert aufweisen.

Das Kapazitätsbauteil muss dabei eine Kapazität C aufweisen, welche so gross ist, damit sie zusammen mit der Ladespannung genügend Energie für die Entmagnetisierung des magnetisch wirksamen Kerns 4 zur Verfügung stellen kann. Das Kapazitätsbauteil umfasst bevorzugterweise mindestens einen Kondensator, wobei der Kondensator eine Kondensatorladespannung aufweist, welche bevorzugt grösser als 1kV, besonders bevorzugterweise grösser 2kV ist.

Bevorzugterweise umfasst das Induktivitätsbauteil die Spule 104 der Magnetisierungsvorrichtung 100. Die Spule 104 muss derart ausgestaltet sein, dass der Spuleninnenraum grösser als der zu entmagnetisierende magnetisch wirksame Kern 4 des Laufrads 10.

Bevorzugterweise wird die Entmagnetisierung des magnetisch wirksamen Kerns 4 durch ein abklingendes Wechselfeld bewerkstelligt. Dabei soll bevorzugterweise durch die Magnetisierungsvorrichtung 100 zu Beginn ein Magnetfeld erzeugt werden, dessen Feldstärkenrichtung negativ gegenüber der des magnetisch wirksamen Kerns 4 ist.

Das abklingende Wechselfeld weist mehrere Schwingungen auf, wobei die Dämpfung des abklingenden Wechselfelds derart gewählt werden muss, dass eine Mindestanzahl an Schwingungen vorhanden ist, sodass ein möglichst geringes Restmagnetfeld des magnetisch wirksamen Kerns 4 am Ende des Entmagnetisierungsvorgangs vorhanden ist. Diese Mindestanzahl an Schwingungen liegt bevorzugterweise bei mindestens vier, besonders bevorzugt bei mindestens sechs Schwingungen.

Fig. 14 zeigt eine schematische Darstellung einer zweiten Variante einer Spuleneinheit 103. Bei dieser Variante umfasst die Spuleneinheit 103 zwei Spulen 104a, 104b. Mit solch einer Ausgestaltung der Spuleneinheit 103 werden bevorzugterweise Laufräder 10 und/oder Rotoren 1 mit einem einpolpaarigen magnetisch wirksamen Kern 4 ent-/magnetisiert. Die Spuleneinheit 103 umfasst in diesem Ausführungsbeispiel eine Kühlung 110, welche die Spulen 104a, 104b kühlt. Die Kühlung 110 kann eine Gas- und/oder Fluidkühlung sein. Zum Beispiel kann Luft und/oder Wasser zur Kühlung benutzt werden. Ferner ist es möglich, dass die Kühlung 110 als eine passive und/oder aktive Kühlung 110 ausgestaltet ist. Die Kühlung 110 kann dabei an den Spulen 104a, 104b angeordnet sein aber auch innerhalb bzw. teilweise innerhalb der Spulen 104a, 104b.

Fig. 15 zeigt eine schematische Darstellung einer dritten Variante einer Spuleneinheit 103. Das Laufrad 10 bzw. der Rotor 1 in diesem Ausführungsbeispiel weist einen mehrpolpaarigen magnetisch wirksamen Kern 4 auf. Der magnetisch wirksame Kern 4 weist dabei ein erstes Polpaar 4a und ein zweites Polpaar 4b auf.

In diesem Ausführungsbeispiel ist im Inneren der Spulen 104a, 104b, 104c, 104d ein Spulenkern 112 angeordnet. Der Spulenkern 112 ist aus einem Material hergestellt, welche eine gute magnetische Leitfähigkeit aufweist.

Es versteht sich, dass auch grössere Pol-, respektive Polpaar-Zahlen des magnetisch wirksamen Kerns 4 durch die Magnetisierungsvorrichtung 100 ent-/magnetisiert werden können.

Es versteht sich, dass alle in der Figurenbeschreibung gezeigten Ausführungsbeispiele mit ihren jeweiligen Eigenarten und Komponenten untereinander in jeglicher Form kombinierbar sind.

**Patentansprüche**

1. Verfahren zur Herstellung eines Rotors (1) für Vorrichtungen mit magnetisch gelagertem Rotor (1), umfassend die folgenden Schritte:

   Bereitstellen eines magnetisch lagerbaren Laufrads (10), welches einen magnetisch wirksamen Kern (4) aufweist, der von einer Ummantelung (30) vollständig umschlossen wird, wobei die Ummantelung (30) einen Kunststoff umfasst, und wobei auf der Ummantelung (30) mindestens ein Laufradelement (20) zur Interaktion mit Substanzen vorgesehen ist;
   Bereitstellen einer Magnetisierungsvorrichtung (100), wobei die Magnetisierungsvorrichtung (100) für die Entmagnetisierung und/oder die Magnetisierung des magnetisch wirksamen Kerns (4) vorgesehen ist, wobei die Magnetisierungsvorrichtung (100) eine Aufnahme (101) umfasst, in welche das Laufrad (10) und/oder der Rotor (1) einsetzbar sind;
   Einsetzen des Laufrads (10) in die Aufnahme (101) und Entmagnetisierung des magnetisch wirksamen Kerns (4);
   Trennen des magnetisch wirksamen Kerns (4) von der Ummantelung (30);
   Anbringen einer Umkapselung (3) an dem magnetisch wirksamen Kern (4), welche einen Kunststoff umfasst, und welche den magnetisch wirksamen Kern (4) vollständig umschliesst;
   Anbringen von mindestens einem Förderelement (2) auf der Umkapselung (3).

2. Verfahren nach Anspruch 1, wobei der magnetisch wirksame Kern (4) eine Magnetisierungsrichtung (MR) aufweist, wobei vor der Entmagnetisierung des magnetisch wirksamen Kerns (4) die Magnetisierungsrichtung (MR) bestimmt wird.

3. Verfahren nach Anspruch 2, wobei die Bestimmung der Magnetisierungsrichtung (MR) durch eine Magnetfeldmessung und/oder durch eine, an dem Laufrad (10) angebrachte Kennzeichnung (KZ) für die Magnetisierungsrichtung (MR) erfolgt.

4. Verfahren nach Anspruch 2-3, wobei das Einsetzen des Laufrads (10) in die Aufnahme (101) ausgerichtet erfolgt, wobei die Ausrichtung anhand der bestimmten Magnetisierungsrichtung (MR) erfolgt.

5. Verfahren nach einem der vorangehenden Ansprüche, wobei das Laufrad (10) und/oder der Rotor (1) in der Aufnahme (101) fixiert wird, sodass keine Translation- und/oder Rotationsbewegung des Laufrads (10) und/oder des Rotors (1) möglich ist.

6. Verfahren nach einem der vorangehenden Ansprüche, wobei die Entmagnetisierung des magnetisch wirksamen Kerns (4) durch ein abklingendes Wechselfeld erfolgt.

7. Verfahren nach Anspruch 6, wobei das abklingende Wechselfeld eine Frequenz (F) aufweist, wobei der magnetisch wirksame Kern (4) ein permanentmagnetisches Material umfasst, wobei das permanentmagnetische Material eine magnetische Permeabilität (μ) und eine elektrische Leitfähigkeit (σ) aufweist, wobei der magnetisch wirksame Kern (4) eine axiale Erstreckung in einer axialen Richtung (A) und eine radiale Erstreckung in einer radialen Richtung (R) aufweist, wobei die axiale Richtung (A) und die radiale Richtung (R) senkrecht zu einander angeordnet sind, wobei das abklingende Wechselfeld eine Eindringtiefe (T) in den magnetisch wirksamen Kern (4) aufweist, wobei die Eindringtiefe (T) mindestens gleich gross ist, wie die Hälfte der axialen Erstreckung und/oder der radialen Erstreckung, und wobei die Frequenz (F) die Beziehung

$$F < \frac{1}{\pi \cdot \mu \ \cdot \sigma \cdot T^2}$$ erfüllt.

8. Verfahren nach einem der vorangehenden Ansprüche, wobei der magnetisch wirksame Kern (4) nach Anbringen der Umkapselung (3) und/oder nach Anbringen des mindestens einen Förderelements (2) auf der Umkapselung (3) magnetisiert wird.

9. Rotor für Vorrichtungen mit magnetisch gelagertem Rotor, hergestellt durch das Verfahren nach Anspruch 1-8.

10. Rotor nach Anspruch 9, wobei der Rotor als Einmalteil ausgestaltet ist.

11. Magnetisierungsvorrichtung zur Durchführung eines Verfahrens nach Anspruch 1-8, umfassend eine Generatoreinheit (102), eine Spuleneinheit (103) und eine Aufnahme (101), in welche das Laufrad (10) und/oder der Rotor (1) einsetzbar sind und womit der magnetisch wirksame Kern (4) entmagnetisiert und/oder magnetisiert werden kann.

12. Magnetisierungsvorrichtung nach Anspruch 11, wobei die Spuleneinheit (103) die Aufnahme (101) und mindestens eine Spule (104) umfasst.

13. Magnetisierungsvorrichtung nach Anspruch 11-12, wobei in die Aufnahme (101) ein Fixierungselement (105) einsetzbar ist, in welchem das Laufrad (10) und/oder der Rotor (1) in einer vorgegebenen Position fixiert werden können, sodass keine Translation- und/oder Rotationsbewegung des Laufrads (10) und/oder des Rotors (1) möglich ist.

14. Magnetisierungsvorrichtung nach Anspruch 13, wobei die vorgegebene Position eine Magnetisierungsposition darstellt, wobei in der Magnetisierungsposition die Magnetisierungsrichtung (MR) des magnetisch wirksamen Kerns (4) parallel zu einer Richtung (RM) ausgerichtet ist, wobei die Richtung (RM) die Feldrichtung eines Magnetisierungsfelds oder eines Entmagnetisierungsfelds darstellt.

15. Magnetisierungsvorrichtung nach Anspruch 11-14, wobei die Magnetisierungsvorrichtung einen Schwingkreis (106) umfasst, wobei der Schwingkreis (106) mindestens ein Widerstandsbauteil (107) mit einem elektrischen Widerstand (R), mindestens ein Kapazitätsbauteil (108) mit einer Kapazität (C) und mindestens ein Induktivitätsbauteil (109) mit einer Induktivität (L) umfasst, wobei der Schwingkreis (106) einen Schwingkreiskennwert (SK) aufweist, wobei der Schwingkreiskennwert (SK) während dem Entmagnetisieren die Beziehung

$$SK = \frac{R}{2} \cdot \sqrt{\frac{C}{L}} < 1$$ erfüllen muss.

Fig. 1

Fig. 2

Fig. 3

Fig. 4

Fig. 5

Fig. 6

Fig. 7

Fig. 8

Fig. 9

Fig. 10

Fig. 11

EP 4 650 605 A1

Fig. 12

C-C'

1, 10

4

104

Fig. 13

1, 10

105b

105a

2, 20

4

Fig. 14

Fig. 15

Europäisches
Patentamt

European
Patent Office

Office européen
des brevets

## EUROPÄISCHER RECHERCHENBERICHT

Nummer der Anmeldung

EP 25 17 6296

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 2019/013747 A1 (BARLETTA NATALE [CH] ET AL) 10. Januar 2019 (2019-01-10) * Abbildungen 1,2 * * Absatz [0057] * * Ansprüche 1,15 * | 1-15 | INV. F04D13/06 B01F33/453 F04D29/22 F04D29/62 |
| | ----- | | |
| A | CN 219 704 973 U (JIANGMEN WANHUA PLASTIC PRODUCTS CO LTD) 19. September 2023 (2023-09-19) * Abbildungen 1-4 * * Anspruch 1 * | 1-15 | |
| | ----- | | |
| A | US 2017/302145 A1 (HOLENSTEIN THOMAS [CH] ET AL) 19. Oktober 2017 (2017-10-19) * Abbildungen 45-52 * * Absätze [0212] - [0235] * | 1-15 | |
| | ----- | | |

**RECHERCHIERTE SACHGEBIETE (IPC)**

F04D
B01F

Der vorliegende Recherchenbericht wurde für alle Patentansprüche erstellt

| Recherchenort | Abschlußdatum der Recherche | Prüfer |
|---|---|---|
| Den Haag | 29. September 2025 | Ingelbrecht, Peter |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
..................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 25 17 6296

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-09-2025

| Im Recherchenbericht angeführtes Patentdokument | Datum der Veröffentlichung | Mitglied(er) der Patentfamilie | Datum der Veröffentlichung |
|---|---|---|---|
| US 2019013747 A1 | 10-01-2019 | CN 109217507 A | 15-01-2019 |
| | | CN 118889727 A | 01-11-2024 |
| | | EP 3425204 A1 | 09-01-2019 |
| | | JP 7657535 B2 | 07-04-2025 |
| | | JP 7723724 B2 | 14-08-2025 |
| | | JP 2019015287 A | 31-01-2019 |
| | | JP 2024032709 A | 12-03-2024 |
| | | KR 20190004648 A | 14-01-2019 |
| | | KR 20240125529 A | 19-08-2024 |
| | | TW 201907644 A | 16-02-2019 |
| | | US 2019013747 A1 | 10-01-2019 |
| CN 219704973 U | 19-09-2023 | KEINE | |
| US 2017302145 A1 | 19-10-2017 | CN 107302294 A | 27-10-2017 |
| | | EP 3232549 A1 | 18-10-2017 |
| | | JP 7019304 B2 | 15-02-2022 |
| | | JP 2017192295 A | 19-10-2017 |
| | | KR 20170117877 A | 24-10-2017 |
| | | US 2017302145 A1 | 19-10-2017 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3115103 A1